(19) **Europäisches Patentamt**
**European Patent Office**
**Office européen des brevets**

(11) **EP 2 527 804 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(51) Int Cl.:
***G01F 23/284*** *(2006.01)*

(21) Anmeldenummer: **11167916.3**

(22) Anmeldetag: **27.05.2011**

(54) **Verfahren zur Erkennung von Mehrfach- und Bodenechos**

Method for recognising multiple and ground echoes

Procédé de reconnaissance d'échos multiples et d'échos de sol

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.11.2012 Patentblatt 2012/48**

(73) Patentinhaber: **VEGA Grieshaber KG**
**77709 Wolfach (DE)**

(72) Erfinder: **WELLE, Roland**
**77709 Oberwolfach (DE)**

(74) Vertreter: **Maiwald Patent- und Rechtsanwaltsgesellschaft mbH Elisenhof Elisenstraße 3 80335 München (DE)**

(56) Entgegenhaltungen:
**DE-A1-102004 052 110 US-A1- 2009 158 839**

## Beschreibung

Gebiet der Erfindung

Die vorliegende Erfindung betrifft die Bestimmung der Position einer Füllgutoberfläche bei der Messung von Füllständen aller Art. Insbesondere betrifft die vorliegende Erfindung ein Füllstandmessgerät zur Bestimmung der Position eines Füllstandes oder einer Trennschicht in einem Behälter, ein Verfahren zur Bestimmung der Position eines Füllstandes oder einer Trennschicht in einem Behälter, ein Programmelement und ein computerlesbares Medium.

Technischer Hintergrund der Erfindung

Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet ein Sensor die vom Füllgut, den Behältereinbauten und dem Behälter selbst reflektierten Echosignale auf, und leitet daraus die Lage oder Position einer Oberfläche zumindest eines der im Behälter befindlichen Füllgüter ab.

Bei der Verwendung akustischer oder optischer Wellen breitet sich das vom Füllstandmessgerät erzeugte Signal im Allgemeinen frei in Richtung der zu vermessenden Füllgutoberfläche aus. Bei Geräten, welche Radarwellen zur Vermessung der Füllgutoberfläche benutzen, kommt sowohl eine freie Ausbreitung in Richtung des zu vermessenden Mediums in Betracht, als auch eine Ausbreitung im Inneren eines Hohlleiters, welcher die Radarwellen vom Füllstandmessgerät zum Medium führt. Bei Geräten nach dem Prinzip der geführten Mikrowelle werden die hochfrequenten Signale entlang eines Wellenleiters zum Medium hin geführt.

An der Oberfläche des zu vermessenden Mediums oder Füllguts wird ein Teil der ankommenden Signale reflektiert, und gelangt nach entsprechender Laufzeit wieder zurück zum Füllstandmessgerät. Die nicht reflektierten Signalanteile dringen in das Medium ein, und breiten sich entsprechend den physikalischen Eigenschaften des Mediums in diesem weiter in Richtung des Behälterbodens aus. Am Behälterboden werden auch diese Signale reflektiert, und gelangen nach Passage des Mediums und der überlagerten Atmosphäre wieder zurück zum Füllstandmessgerät.

Das Füllstandmessgerät empfängt die an verschiedenen Stellen reflektierten Signale und bestimmt daraus nach bekannten Verfahren die Distanz zum Füllgut.

Die bestimmte Distanz zum Füllgut wird nach außen hin bereitgestellt. Die Bereitstellung kann in analoger Form (4.20 mA Schnittstelle) oder auch in digitaler Form (Feldbus) realisiert werden.

Der prinzipielle Aufbau von Radar-Füllstandsensoren wird im Buch von Peter Devine: Füllstandmessung mit. Radar Leitfaden für die Prozessindustrie (ISBN 3-00-008216-6) ausführlich dargestellt.

Allen Verfahren gemein ist, dass sich das zur Messung verwendete Signal auf dem Weg vom Füllstandmessgerät hin zur Füllgutoberfläche im Einflussbereich eines weiteren Mediums befindet, welches nachfolgend als Überlagerungsmedium bezeichnet werden soll. Dieses Überlagerungsmedium befindet sich zwischen dem Füllstandmessgerät und der Oberfläche des zu vermessenden Mediums, und wird im Allgemeinen durch eine Flüssigkeit oder eine gasförmige Atmosphäre dargestellt.

In der überwiegenden Zahl an Anwendungsfällen befindet sich oberhalb des zu vermessenden Mediums Luft. Da sich die Ausbreitung elektromagnetischer Wellen in Luft nur unwesentlich von der in Vakuum unterscheidet, bedarf es keiner besonderen Korrekturen der Signale, welche vom Füllgut, den Behältereinbauten und dem Behälter selbst durch die Luft hindurch zum Füllstandmessgerät zurück reflektiert werden.

In Prozessbehältern der chemischen Industrie können weiterhin aber alle Arten von chemischen Gasen und Gasgemischen als Überlagerungsmedium auftreten. In Abhängigkeit von den physikalischen Eigenschaften dieser Gase oder Gasgemische werden die Ausbreitungseigenschaften elektromagnetischer Wellen im Vergleich zu einer Ausbreitung im Vakuum oder in Luft verändert.

Die DE 10 2004 052110 A1 offenbart ein Füllstandmessgerät zur Bestimmung der Position eines Füllstandes und/oder einer Trennschicht in einem Behälter, das Füllstandmessgerät aufweisend: eine Echokurvenerfassungseinrichtung zum Erfassen einer Echokurve; eine Echoidentifikationseinrichtung zur Identifikation von zumindest zwei Echos in der Echokurve; eine Geschwindigkeitsermittlungseinrichtung zur Ermittlung von Geschwindigkeitswerten der zumindest zwei Echos; wobei das Füllstandmessgerät zur Durchführung einer alternierenden Postulierung eines der identifizierten Echos als Füllstandecho und zur Durchführung einer Echoklassifikation der zumindest zwei Echos ausgeführt ist; wobei die Echoklassifikation eine Klassifikation zumindest eines weiteren identifizierten Echos und eine Berechnung der entsprechenden Wahrscheinlichkeiten für eine korrekte Klassifikation umfasst; und wobei die Echoklassifikation zumindest zwei der identifizierten Echos der Echokurve einer Merkmalsklasse ausgewählt aus einer Gruppe umfassend die Merkmalsklassen Bodenecho, Mehrfachecho, Antikorrelationsecho und Füllgutecho zuordnet; wobei das Füllstandmessgerät ferner eine Statistikeinrichtung aufweist.

Zusammenfassung der Erfindung

Es ist eine Aufgabe der vorliegenden Erfindung, ein Verfahren zur robusten Erkennung von Mehrfach- und Bodenechos bereitzustellen.

Diese Aufgabe wird durch die Merkmale der unabhängigen Patentansprüche gelöst. Weiterbildungen der Erfindung ergeben sich aus den Unteransprüchen und der folgenden Beschreibung von Aspekten und Ausführungsbeispielen.

Gemäß einem ersten Aspekt der Erfindung ist ein Füllstandmessgerät zur Bestimmung der Position eines Füllstandes und/oder einer Trennschicht in einem Behälter gemäß Anspruch 1 angegeben.

Mit anderen Worten entscheidet die Echoklassifikationseinrichtung anhand des Vorzeichens eines Verhältnisses der Geschwindigkeit zweier Echos, ob zumindest eines der Echos ein Bodenecho oder ein Mehrfachecho oder ein Antikorrelationsecho ist.

Die Echoidentifikationseinrichtung, die Geschwindigkeitsermittlungseinrichtung und/oder die Statistikeinrichtung können auch eine gemeinsame Einrichtung sein, die entsprechend ausgeführt ist, die oben und im Folgenden beschriebenen Schritte und Funktionen auszuführen.

Gemäß einem weiteren Aspekt der Erfindung kann das Füllstandmessgerät auch in der Lage sein, mehr als zwei Echos in der Echokurve zu identifizieren und die jeweiligen Positionen und/oder Geschwindigkeitswerte dieser Echos zu ermitteln und die entsprechenden statistischen Eigenschaften der gemeinsamen Kennzahlen auszuwerten.

Weiterhin kann das Füllstandmessgerät eine Trackingeinrichtung aufweisen, welche identifizierte Echos in einen logischen Zusammenhang zu bereits früher identifizierten Echos stellt. Weiterhin kann die Trackingeinrichtung eingerichtet sein, bei Fehlen eines Echos in der Echokurve eine wahrscheinliche Position dieses Echos abzuschätzen. Diese Abschätzung kann beispielsweise dadurch geschehen, dass bei Fehlen eines Echos eine unsichtbare Strecke in einen Track eingefügt wird.

Mit anderen Worten weist das Füllstandmessgerät eine Trackingeinrichtung auf, die Echos, welche durch Reflexionen an identischen Stellen im Behälter erzeugt werden, und welche identische Ausbreitungswege des vom Füllstandmessgerät erzeugten Signals beschreiben, gruppiert. Weiterhin ist die Trackingeinrichtung ausgeführt, das Fehlen eines Echos oder einer Reflexion einer vorab beobachteten Reflexionsstelle in der Echokurve zu erkennen und zu verarbeiten.

Das Füllstandmessgerät kann gemäß einem weiteren Aspekt in der Lage sein, die Klassifikation, Lage und Ordnung eines Echos oder sogar aller identifizierten Echos zu bestimmen und auszugeben.

Gemäß einem weiteren Aspekt der Erfindung kann die Statistikeinrichtung die Kennzahlen zumindest eines oder aller Paare identifizierter Echos ermitteln.

Gemäß einem weiteren Aspekt der Erfindung stellt die Statistikeinrichtung die Echoklassifikation als Histogramm dar, in welchem jede mögliche Merkmalsklasse jedes der identifizierten Echos einer Wahrscheinlichkeit zugeordnet ist, welche zum Ausdruck bringt, wie hoch die statistische Wahrscheinlichkeit dafür ist, dass das entsprechende Echo der entsprechenden Merkmalsklasse tatsächlich angehört.

Gemäß einem weiteren Aspekt der Erfindung nimmt die Geschwindigkeitsermittlungseinrichtung eine Analyse aufgrund von Positions- und Zeitdifferenzen vorab gruppierter Echos eines Echotracks vor.

Gemäß einem weiteren Aspekt der Erfindung ist das Füllstandmessgerät zum Bestätigen oder Revidieren der Echoklassifikationen durch eine Erfassung und Auswertung einer weiteren Echokurve ausgeführt. In anderen Worten erfolgt eine fortlaufende Geschwindigkeitsanalyse, anhand derer die Neubewertung alter Bewertungen und Klassifikationen erfolgt, indem die neuen Geschwindigkeitswerte und Kennzahlen in die statistische Auswertung einfließen.

Auf diese Weise können die Wahrscheinlichkeiten, dass die entsprechende Echoklassifikation die richtige ist, nach jeder Füllstandmessung neu berechnet werden.

Gemäß einem weiteren Aspekt der Erfindung ist das Füllstandmessgerät zur simultanen Identifikation von Mehrfachechos und Bodenechos ausgeführt. Hierunter mag zu verstehen sein, dass die Identifikation der Boden- und Mehrfachechos in einem einzigen Verfahrensschritt erfolgt.

Gemäß einem weiteren Aspekt der Erfindung ist ein Verfahren zur Bestimmung der Position eines Füllstandechos und/oder einer Trennschicht eines Füllguts in einem Behälter gemäß Anspruch 7 angegeben, bei dem zumindest eine Echokurve erfasst wird und dann zumindest zwei Echos in der Echokurve identifiziert werden. Daraufhin erfolgt die Ermittlung von Positionen und/oder von Geschwindigkeitswerten der zumindest zwei Echos.

Daraufhin erfolgt die Durchführung einer Echoklassifikation der zumindest zwei Echos unter Berücksichtigung eines Vorzeichens eines Verhältnisses der ermittelten Geschwindigkeitswerte, wobei die Echoklassifikation jedes der identifizierten Echos der Echokurve einer Merkmalsklasse ausgewählt aus einer Gruppe umfassend die Merkmalsklassen Bodenecho, Mehrfachecho, Antikorrelationsecho und Füllgutecho zuordnet.

Auch erfolgt eine Auswertung statistischer Eigenschaften einer gemeinsamen Kennzahl der zwei oder mehr Echos (also z.B. eine Auswertung der gemeinsamen Kennzahlen sämtlicher Echopaare der Vielzahl an identifizierten Echos in der Echokurve), wobei die gemeinsame Kennzahl (die gemeinsamen Kennzahlen) ein Verhältnis (Verhältnisse) der ermittelten Positionen oder der ermittelten Geschwindigkeitswerte der zwei Echos (der entsprechenden Echopaare) ist.

Gemäß einem weiteren Aspekt der Erfindung erfolgt nach a1) der Identifikation einer Vielzahl an Echos in der Echokurve b1) eine Durchführung einer Echoklassifikation zumindest zweier oder aller identifizierter Echos in der Echokurve als Ergebnis der Auswertung der statistischen Eigenschaften der gemeinsamen Kennzahlen zumindest zweier oder aller identifizierten Echos, wobei die Echoklassifikation zumindest zwei oder jedes der identifizierten Echos der Echokurve einer Merkmalsklasse zuordnet. Diese Merkmalsklasse ist ausgewählt aus der Gruppe umfassend die Merkmalsklassen Bodenecho, Mehrfachecho, Antikorrelationsecho und Füllgutecho. An dieser Stelle sei darauf hingewiesen, dass die hier und im Folgenden genannten Verfahrensschritte in dem Programmelement und dem computerlesbaren Medium implementiert sein und von dem Füllstandmessgerät ausgeführt werden können. Darüber hinaus können die oben und im Folgenden genannten Merkmale des Füllstandmessgeräts auch als Verfahrensschritte implementiert werden.

Gemäß der Erfindung erfolgt nach der Identifikation der Vielzahl an Echos in der Echokurve eine alternierende Postulierung eines der identifizierten Echos als Füllstandecho, wobei die Echoklassifikation eine Klassifikation zumindest eines oder aller übrigen identifizierten Echos und eine Berechnung der entsprechenden Wahrscheinlichkeiten für eine korrekte Klassifikation umfasst.

In anderen Worten wird also eines der identifizierten Echos von vornherein als Füllstandecho klassifiziert, woraufhin die Echoklassifikation der übrigen Echos stattfindet. Danach wird dann ein anderes Echo als Füllstandecho identifiziert und die Klassifikation für die anderen Echos durchgeführt werden, und so weiter.

Gemäß einem weiteren Aspekt der Erfindung erfolgt eine Bestätigung oder Revision der Echoklassifikationen durch eine Erfassung einer weiteren Echokurve und Durchführung zumindest der Schritte (a1) und (b) sowie Anpassung der entsprechenden Wahrscheinlichkeiten für eine korrekte Klassifikation.

Gemäß einem weiteren Aspekt der Erfindung erfolgt die Klassifikation für ein Mehrfachecho nullter Ordnung bei einem Geschwindigkeitsverhältnis von 0,5 bis 1,5, für ein Mehrfachecho erster Ordnung bei einem Geschwindigkeitsverhältnis von 1,5 bis 2,5, für ein Mehrfachecho zweiter Ordnung bei einem Geschwindigkeitsverhältnis von 2,5 bis 3,5, für ein Bodenecho bei einem Geschwindigkeitsverhältnis von minus 9 bis minus 4 und für ein Antikorrelationsecho bei allen übrigen Geschwindigkeitsverhältnissen.

Gemäß einem weiteren Aspekt der Erfindung ist ein computerlesbares Medium zum Speichern eines Programmelements angegeben, das, wenn es auf einem Prozessor des Füllstandmessgeräts der Erfindung ausgeführt wird, den Prozessor anleitet, die oben und im Folgenden beschriebenen Schritte durchzuführen.

Gemäß einem weiteren Aspekt der Erfindung ist ein Programmelement angegeben, das, wenn es auf einem Prozessor des Füllstandmessgeräts der Erfindung ausgeführt wird, den Prozessor anleitet, die oben und im Folgenden beschriebenen Verfahrensschritte durchzuführen.

Kurze Beschreibung der Figuren

Fig. 1 zeigt ein Füllstandmessgerät, das nach einem Laufzeitverfahren arbeitet.

Fig. 2 zeigt Verfahrensschritte zur Bestimmung des Füllstandes nach einem Laufzeitverfahren.

Fig. 3 zeigt Verhältnisse bei nicht geraden Behälterdeckeln.

Fig. 4 zeigt eine Füllstandmessung mit Mehrfachechos.

Fig. 5 zeigt eine Füllstandmessung in einem Domschacht.

Fig. 6 zeigt eine Füllstandmessung ohne Behälterdeckel.

Fig. 7 zeigt ein Füllstandmessgerät gemäß einem Ausführungsbeispiel der Erfindung.

Fig. 8 zeigt Messzyklen mit einem Füllstandmessgerät gemäß einem Ausführungsbeispiel der Erfindung.

Fig. 9 zeigt ein Ablaufdiagramm zur Füllstandmessung mit einem Füllstandmessgerät gemäß einem Ausführungsbeispiel der Erfindung.

Fig. 10 zeigt ein Ablaufdiagramm zur Aktualisierung einer Statistik gemäß einem Ausführungsbeispiel der Erfindung.

Fig. 11 zeigt eine Definition von Echoklassen zur Mehrfach- und Bodenechoerkennung.

Fig. 12 zeigt eine Kombinatorik einer Statistikeinheit gemäß einem Ausführungsbeispiel der Erfindung.

Fig. 13 zeigt Zustände einer Statistikeinheit bei korrektem Tracking einer Folge von Echos.

Fig. 14 zeigt Zustände einer Statistikeinheit bei fehlerhaftem Tracking einer Folge von Echos.

Beschreibung von Ausführungsbeispielen

Die nachfolgenden Ausführungen konzentrieren sich auf die Betrachtung des häufig anzutreffenden Anwendungsfalls eines einzigen zu vermessenden Mediums oder Füllguts in einem Behälter. Allerdings können die dargelegten Zusammenhänge auch auf den Anwendungsfall zweier oder mehrerer verschiedener Medien oder Füllgüter in einem Behälter übertragen werden. Die Position einer Füllgutoberfläche mag im Zusammenhang mit einer Trennschichtmessung insbesondere auch die Position einer Trennschicht zwischen zwei unterschiedlichen Medien oder Füllgütern sein, welche identisch ist mit der Position der Füllgutoberfläche des unteren der beiden Füllgüter oder Medien in einem Behälter zur Trennschichtmessung.

In Geräten zur Füllstandmessung können verschiedene Verfahren angewendet werden, nach denen die Position einer Füllgutoberfläche in einem Behälter ermittelt werden kann.

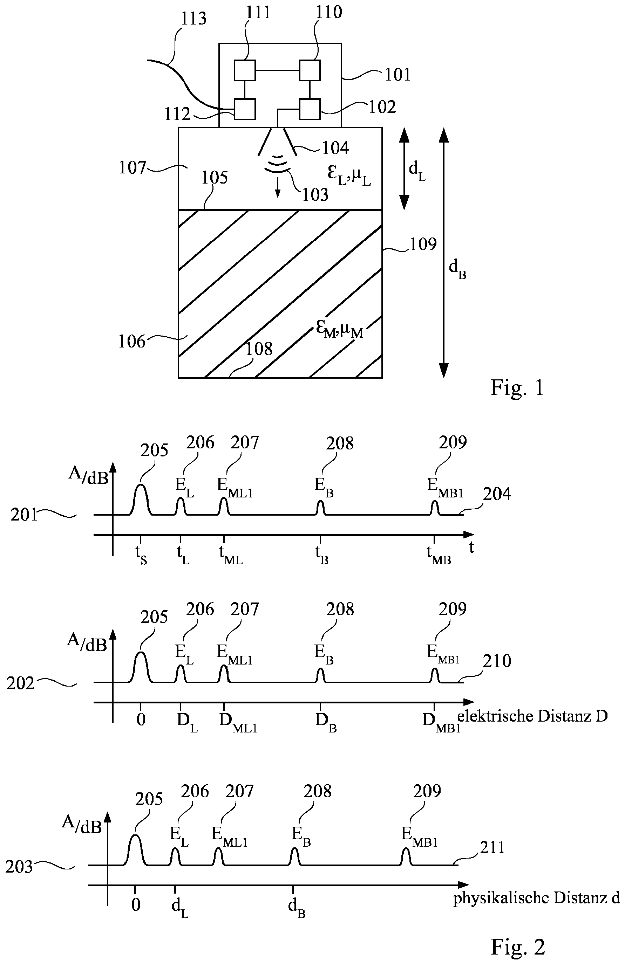

Figur 1 zeigt eine gebräuchliche Anordnung zur Füllstandmessung. Der Behälter 109 ist bis zu einer Füllhöhe $d_B$ - $d_L$ mit einer Flüssigkeit 106 gefüllt. Der Raum 107 über der Flüssigkeit sei beispielsweise mit Luft gefüllt. Im vorliegenden Beispiel wird die Flüssigkeit mit Luft als Überlagerungsmedium bedeckt.

Das Füllstandmessgerät 101 erzeugt mit Hilfe einer Hochfrequenzeinrichtung 102 einen elektromagnetischen Impuls 103 und koppelt diesen in eine geeignete Antenne 104 ein, woraufhin sich dieser Impuls annähernd mit Lichtgeschwindigkeit in Richtung der zu vermessenden Füllgutoberfläche 105 ausbreitet. Die exakte Geschwindigkeit innerhalb des Überlagerungsmediums ergibt sich durch:

$$c_L = \frac{c_0}{\sqrt{\varepsilon_L \cdot \mu_L}}$$

wobei $c_G$ die Lichtgeschwindigkeit im Vakuum, $\varepsilon_L$ die Permittivitätszahl des Überlagerungsmediums und $\mu_L$ die Permeabilitätszahl des Überlagerungsmediums beschreibt.

Die Füllgutoberfläche 105 reflektiert einen Teil der ankommenden Signalenergie, woraufhin sich der reflektierte Signalanteil wieder zurück zum Füllstandmessgerät 101 fortpflanzt. Der nicht reflektierte Signalanteil dringt in die Flüssigkeit 106 ein, und breitet sich darin mit stark verminderter Geschwindigkeit in Richtung des Behälterbodens aus. Die Geschwindigkeit $c_M$ der elektromagnetischen Welle 103 innerhalb der Flüssigkeit 106 wird durch die Materialeigenschaften der Flüssigkeit 106 bestimmt:

$$c_M = \frac{c_0}{\sqrt{\varepsilon_M \cdot \mu_M}}$$

wobei $c_G$ die Lichtgeschwindigkeit im Vakuum, $\varepsilon_M$ die Permittivitätszahl der Flüssigkeit und $\mu_M$ die Permeabilitätszahl der Flüssigkeit beschreibt. Am Boden 108 des Behälters 109 wird der verbliebene Signalanteil ebenfalls reflektiert, und gelangt nach entsprechender Laufzeit wieder zurück zum Füllstandmessgerät 101. Im Füllstandmessgerät werden die ankommenden Signale mit Hilfe der Hochfrequenzeinrichtung 102 aufbereitet, und vorzugsweise in einen niederfrequenteren Zwischenfrequenzbereich transformiert. Mit Hilfe einer Analog-Digital-Wandlereinheit 110 werden die analogen Echokurven, welche von der Hochfrequenzeinrichtung 102 bereitgestellt werden, digitalisiert und einer Auswerteeinrichtung 111 zur Verfügung gestellt.

Die vorgenannten Komponenten, welche zur Bereitstellung einer digitalisierten Echokurve genutzt werden, also insbesondere die Hochfrequenzeinrichtung 102 und die Analog-Digital-Wandlereinheit 110, mögen beispielhaft eine Echokurvenerfassungseinrichtung definieren.

Die Auswerteeinrichtung 111 analysiert die digitalisierte Echokurve, und bestimmt auf Basis der darin enthaltenen Echos nach bekannten Verfahren dasjenige Echo, das von der Reflektion an der Füllgutoberfläche 105 erzeugt wurde. Zudem bestimmt die Auswerteeinrichtung die exakte elektrische Distanz bis zu diesem Echo. Weiterhin wird die ermittelte elektrische Distanz zum Echo derart korrigiert, dass Einflüsse des Überlagerungsmediums 107 auf die Ausbreitung der elektromagnetischen Wellen kompensiert werden. Die so errechnete, kompensierte Distanz zum Füllgut 113 wird einer Ausgabeeinrichtung 112 übergeben, welche den bestimmten Wert entsprechend den Vorgaben des Benutzers weiter aufbereitet, beispielsweise durch Linearisierung, Offsetkorrektur, Umrechnung in eine Füllhöhe $d_B$ - $d_L$. Der aufbereitete Messwert wird an einer externen Kommunikationsschnittstelle 113 nach außen hin bereitgestellt. Hierbei können alle etablierten Schnittstellen verwendet werden, insbesondere 4..20mA - Stromschnittstellen, industrielle Feldbusse wie HART, Profibus, FF, oder aber auch Computerschnittstellen wie RS232, RS485, USB, Ethernet, FireWire.

Figur 2 verdeutlicht nochmals im Detail wichtige Schritte, die im Rahmen der Echosignalverarbeitung in der Auswerteeinrichtung 111 zur Kompensation der Einflüsse verschiedener Medien angewendet werden.

Der Kurvenzug 201 zeigt zunächst die von der Analog-Digital-Wandlereinheit 110 über der Zeit hinweg erfasste Echokurve 204. Die Echokurve beinhaltet zunächst den innerhalb der Antenne reflektierten Anteil des Sendeimpulses 205. Kurze Zeit später wird zum Zeitpunkt $t_L$ ein erstes Echo 206 erfasst, welches durch die Reflexion von Signalanteilen an der Grenzfläche 105 oder Oberfläche 105 des Mediums 106 im Behälter verursacht wird. Ein weiteres Echo 207 entsteht als erstes Vielfachecho des Füllgutechos 206, und wird zum Zeitpunkt $t_{ML}$ erfasst. Die in das Medium 106 eindringenden Signalanteile werden nach Durchlaufen des Füllguts 106 am Behälterboden 108 reflektiert, und erzeugen ein weiteres Echo 208 innerhalb der Echokurve 204. Dieses Bodenecho 208 wird zum Zeitpunkt $t_B$ erfasst. Weiterhin möge zum Zeitpunkt $t_{MB}$ ein Vielfachecho 209 des Bodenechos erfasst werden.

In einem ersten Verarbeitungsschritt wird die zeitabhängige Kurve 201 in eine distanzabhängige Kurve 202 transformiert. Während dieser Transformation wird davon ausgegangen, dass sich die erfasste Kurve ausschließlich durch eine Ausbreitung im Vakuum gebildet hat. Die Ordinate der Darstellung 201 wird durch Multiplikation mit der Lichtgeschwindigkeit im Vakuum in eine Distanzachse umgerechnet. Zudem wird durch Verrechnung eines Offsets erreicht, dass das von der Antenne 104 verursachte Echo 205)den Distanzwert 0m erhält. Weiterhin werden die Distanzwerte mit dem Faktor 0.5 multipliziert, um den doppelten Weg hin zur Füllgutoberfläche und zurück zu kompensieren.

Die zweite Darstellung 202 zeigt die Echokurve als Funktion der elektrischen Distanz D. Die elektrische Distanz entspricht der halben Distanz, die eine elektromagnetische Welle im Vakuum in einer bestimmten Zeit zurücklegt. Die elektrische Distanz berücksichtigt keinerlei Einflüsse eines Mediums, welche möglicherweise zu einer langsameren Ausbereitung der elektromagnetischen Wellen führen. Kurvenzug 202 stellt daher eine unkompensierte, aber auf Orte bezogene Echokurve dar.

In der vorliegenden Beschreibung werden elektrische Distanzen immer mit Großbuchstaben $D$ bezeichnet, wohingegen physikalische Distanzen, welche direkt am Behälter nachgemessen werden können, mit kleinen Buchstaben $d$ bezeichnet werden.

Es mag weiterhin möglich sein, die Echokurve 210 vollständig zu kompensieren. Die dritte Darstellung 203 zeigt eine vollkompensierte Echokurve 211. Um eine Darstellung der Echos über der physikalischen Distanz zu erreichen, muss im vorliegenden Fall der Einfluss des Überlagerungsmediums 107 im Bereich zwischen den Orten 0 und $D_L$ Kurvenzug 202 berücksichtigt werden. Die elektrischen Distanzangaben der Abszisse müssen zwischen 0 und $D_L$ in physikalische Distanzangaben gemäß folgendem Zusammenhang umgerechnet werden:

$$d_i = \frac{D_i}{\sqrt{\varepsilon_L \cdot \mu_L}}$$

Da $\varepsilon_L$ und $\mu_L$ für Luft in guter Näherung dem Wert 1 entsprechen, muss für diesen Abschnitt im vorliegenden Beispiel keine Korrektur erfolgen. Die elektrischen Distanzangaben der Abszisse größer gleich $D_L$ müssen jedoch in physikalische Distanzangaben gemäß folgendem Zusammenhang umgerechnet werden:

$$d_i = d_L + \frac{(D_i - D_L)}{\sqrt{\varepsilon_M \cdot \mu_M}}$$

Die dritte Darstellung 203 zeigt schließlich den korrigierten Verlauf. Sowohl die Distanz zum Echo 206 der Füllgutoberfläche 105 als auch die Distanz zu dem vom Behälterboden 108 erzeugten Echo 208 stimmen mit den am Behälter 109 nachmessbaren Distanzen überein. Die Distanz zum Mehrfachecho 207 der Füllgutoberfläche kann nicht direkt am Behälter nachgemessen werden, da obige Kompensation nur für direkte Reflektionen gültig ist. Gleiches gilt für das Mehrfachecho 209 der Reflektion am Behälterboden 108.

Es sei an dieser Stelle darauf hingewiesen, dass die Umsetzung in Kurvenzug 202, also die Bestimmung der elektrischen Distanzen verschiedener Echos, im Rahmen der Signalverarbeitung im Gerät vorzugsweise für alle Echos durchgeführt wird. Die Umsetzung der Echokurve in eine kompensierte Echokurve wird im Allgemeinen nicht durchgeführt, genügt doch die Korrektur eines einzelnen Distanzwertes zur Füllgutoberfläche.

Für den Anwendungsfall aus Fig.1 ergeben sich in Bezug auf die Distanz zwischen Sensor und Füllgutoberfläche aufgrund vorab bekannter Werte für die Permittivitätszahl und die Permeabilitätszahl der Luft in der praktischen Anwendung keine Probleme. Innerhalb der hier beschriebenen technischen Lehre wird grundsätzlich davon ausgegangen, dass die Eigenschaften der im Behälter befindlichen Medien, insbesondere die Permeabilitätszahlen und die Permittivitätszahlen, innerhalb des Gerätes bekannt sind, beispielsweise nach Eingabe durch den Anwender.

DE 102006019191A1 und WO 2010/071564A1 betreffen Verfahren zur automatisierten Ermittlung dieser Kenngrößen. US 5 438 867 und DE 42 33 324A1 betreffen Verfahren zur automatisierten Ermittlung der Höhe $d_B$ des Behälters 109. Die darin beschriebenen Verfahren können mit der hier beschriebenen technischen Lehre kombiniert werden.

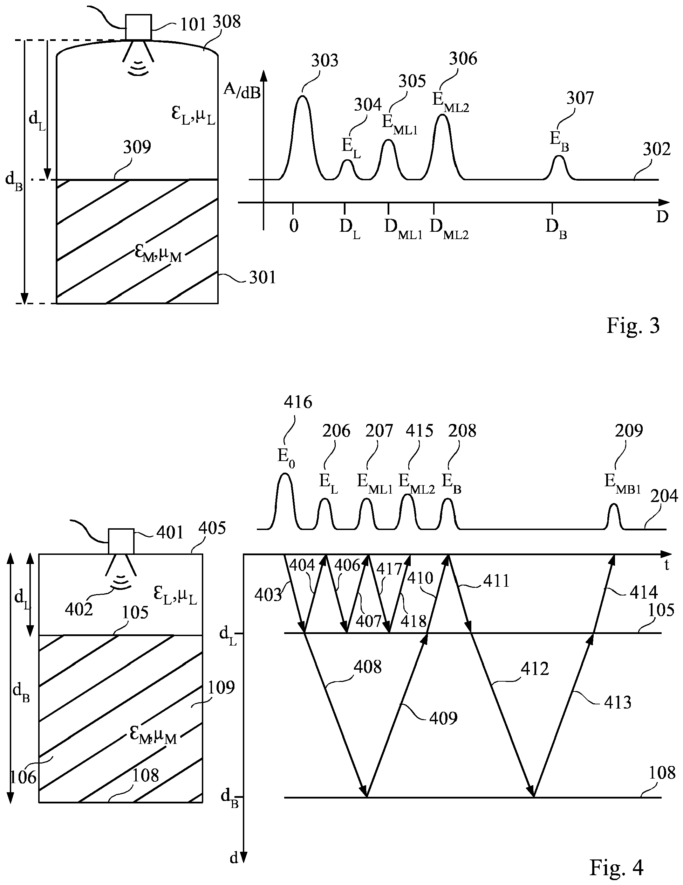

Figur 1 und die sich ergebenden Echokurven der Figur 2 zeigen die Verhältnisse in einer einfachen Messanordnung. Leicht veränderte Reflexionsverhältnisse ergeben sich beispielsweise bei Behältern mit konischen Behälterdecken. Figur 3 zeigt ein Beispiel für einen solchen Behälter 301.

Im Vergleich der Echokurve 302 des Behälters 301 mit konischer Behälterdecke 308 mit der Echokurve 210 des Behälters 109 mit gerader Behälterdecke fällt auf, dass die sich ergebenden Mehrfachechos $E_{ML1}$ und $E_{ML2}$ 305, 306 der Reflexion an der Füllgutoberfläche 309 eine deutlich größere Amplitude besitzen als das Echo $E_L$ 304 der unmittelbaren Füllgutreflexion. Der beobachtete Sachverhalt tritt vorzugsweise bei Behälterdeckeln 308 auf, welche eine konische oder paraboloide Form besitzen. Diese bewirkt bei der Ausbildung von Mehrfachechos zumindest eine partielle Fokussierung der vom Füllstandmessgerät 101 abgestrahlten Mikrowellenenergie, was sich in Form erhöhter Amplitudenwerten der zugehörigen Echos auf die Echokurve abbildet.

Figur 4 verdeutlicht die physikalischen Zusammenhänge, welche zur Ausbildung von Mehrfachechos führen mögen.

Das Füllstandmessgerät 401 erzeugt nach bekannten Verfahren einen elektromagnetischen Impuls 402 und sendet diesen in Richtung der zu vermessenden Füllgutoberfläche 105 aus. Der Signalpfeil 403 skizziert die Ausbreitung des Signals als Funktion der physikalischen Distanz über der Zeit. An der Oberfläche des Füllgutes 105 wird ein Teil des Sendesignals reflektiert und gelangt nach entsprechender Laufzeit zurück zum Füllstandmessgerät. Signalpfad 404 verdeutlicht diesen Ausbreitungsweg. Das Füllstandmessgerät bildet aufgrund der empfangenen Signale eine Echokurve 204, welche bedingt durch die Signalpfade 403 und 404 ein erstes Echo $E_L$ 206 aufweist. Ein Teil der Signale wird beispielsweise an der Behälterdecke 405 oder am Füllstandmessgerät 401 erneut reflektiert, und breitet sich in Richtung der Füllgutoberfläche 105 aus, was durch den Signalpfeil 406 angedeutet wird. Dieser Signalanteil wird von der Füllgutoberfläche erneut reflektiert, und gelangt nach entsprechender Laufzeit zurück zum Füllstandmessgerät 401, wo er als erstes Mehrfachecho $E_{ML1}$ 207 der Füllgutreflexion erfasst und auf die Echokurve 204 abgebildet wird. Signalpfad 407 verdeutlicht den Vorgang.

Ein Teil der abgestrahlten Signalenergie 402, welcher nicht an der Füllgutoberfläche 105 reflektiert wird, dringt in das Medium 106 ein und breitet sich in diesem in Richtung des Behälterbodens 108 mit verminderter Geschwindigkeit weiter aus 408. Am Behälterboden wird das Signal reflektiert, und gelangt nach entsprechender Laufzeit zurück zum Füllstandmessgerät. Die Signalpfade 409 und 410 verdeutlichen die Ausbreitung des Signals auf diesem Pfad. Es ist zu beachten, dass sich das Signal in den verschiedenen Medien mit unterschiedlichen Geschwindigkeiten ausbreitet, was sich im Signalpfaddiagramm durch unterschiedliche Steigungen der Signalpfade 409, 410 erkennen lässt. Das Füllstandmessgerät empfängt die vom Behälterboden reflektierten Signalanteile, und bildet diese in Form eines Bodenechos $E_B$ 208 in der Echokurve 204 ab. Analog zur Bildung von Mehrfachechos 207, 415 der Füllgutreflexion kann unter günstigen Verhältnissen auch die Ausbildung eines oder mehrerer Mehrfachechos des Bodenechos beobachtet werden. Die Signalpfade 411, 412, 413, 414 verdeutlichen das Zustandekommen eines ersten Mehrfachechos $E_{MB1}$ 209 des Bodenechos $E_B$ 208, welches sich in der vom Füllstandmessgerät empfangenen Echokurve 204 nach entsprechender Laufzeit ebenfalls abbildet.

Grundsätzlich ist es möglich, Mehrfachechos höherer Ordnung zu konstruieren. Das Signalpfaddiagramm zeigt hierzu die Signalpfade 417 und 418, welche geeignet sind, ein Mehrfachecho $E_{ML2}$ 415 zweiter Ordnung bezogen auf die Reflexion der Füllgutoberfläche zu erzeugen. Entsprechende Mehrfachechos höherer Ordnung sind auch für die Reflexion des Behälterbodens möglich. Es mag einem Fachmann keine Probleme bereiten, die Aspekte der vorliegenden Erfindung, welche nachfolgend anhand der Mehrfachechos erster Ordnung dargestellt werden, auf Mehrfachechos höherer Ordnung zu übertragen. Die Ordnung eines Mehrfachechos sei definiert als die Anzahl der Reflexionen eines ausgesendeten Signals an einer Medienoberfläche eines im Behälter zu messenden Füllguts, reduziert um 1. Das Echo $E_L$ ist entsprechend dieser Nomenklatur identisch einem Mehrfachecho 0. Ordnung, wohingegen das Echo $E_{ML1}$

identisch einem Mehrfachecho 1. Ordnung ist.

Weiterhin sind auch gemischte Signalpfade möglich, welche zu weiteren Echos innerhalb der empfangenen Echokurven führen. So mag es beispielsweise möglich sein, dass das Signal nach Durchlaufen des Signalpfades 406 in das Medium eindringt, und sich in Richtung des Behälterbodens ausbreitet. Weiterhin mag es beispielsweise auch möglich sein, dass ein Teil der Signalenergie nach Durchlaufen des Signalpfades 411 von der Füllgutoberfläche reflektiert wird, und sich wieder direkt in Richtung des Füllstandmessgerätes ausbreitet. Gemischte Signalpfade sollen im Rahmen der vorliegenden Erfindung nicht weiter betrachtet werden, da sie in der praktischen Anwendung nahezu keine Rolle spielen. Es mag einem Fachmann aber keine Probleme bereiten, die Aspekte der vorliegenden Erfindung, welche nachfolgend anhand der Mehrfachechos erster Ordnung dargestellt werden, auf gemischte Mehrfachechos zu übertragen. Gemischte Mehrfachechos seien im vorliegenden Kontext definiert als Echos einer Echokurve, welche durch Signalpfade verursacht werden, innerhalb derer sich ein vom Füllstandmessgerät erzeugtes Signal an zumindest zwei unterschiedlichen Grenzflächen zumindest eines in einem Behälter zu messenden Füllguts reflektiert. Vorliegendes Beispiel enthält kein gemischtes Mehrfachecho.

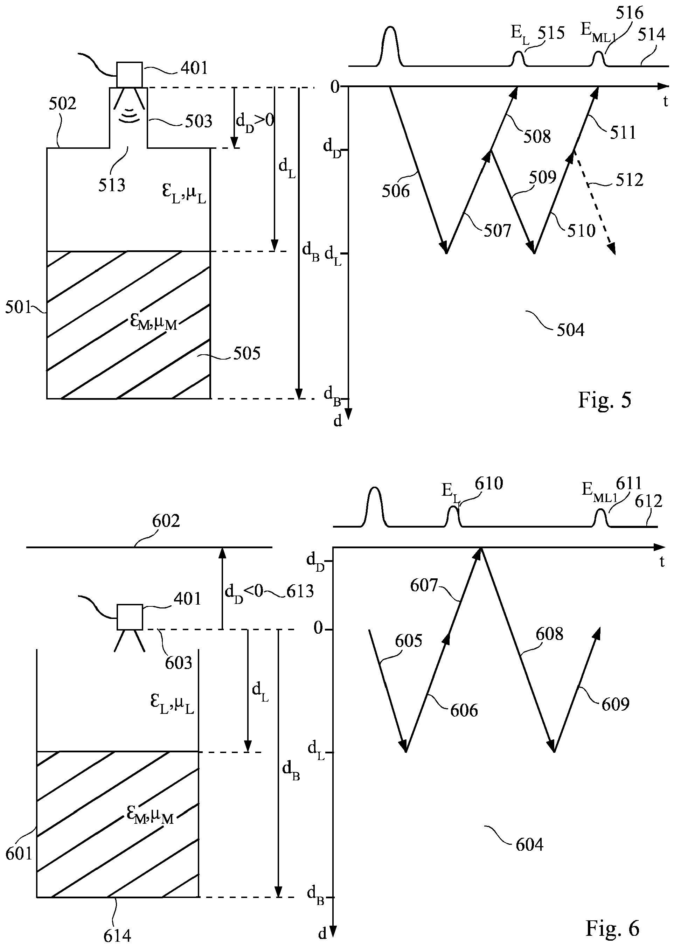

Wenig umfangreich ist die Betrachtung beim Einsatz eines Füllstandmessgerätes in einem Behälter mit einem aufgebauten Domschacht. Figur 5 zeigt ein Beispiel für den Einsatz des erfindungsgemäßen Messgerätes 401 in einem solchen Behälter 501. Das Füllstandmessgerät wird nicht direkt auf Höhe der Behälterdecke 502 montiert, sondern befindet sich in einem Domschacht 503, welcher im Gegensatz zum Beispiel aus Figur 4 hier eine physikalische Länge von $d_D > 0$ aufweist. Die Montageposition des Füllstandmessgerätes im Domschacht beeinflusst die Ausbildung von Vielfachechos massiv. Das Signalpfaddiagramm 504 verdeutlicht die Ausbildung von Mehrfachechos im vorliegenden Fall. Das vom Füllstandmessgerät erzeugte Signal breitet sich zunächst durch den Domschacht 503 und den eigentlichen Behälter hin zur Oberfläche des Mediums 505 aus. Signalpfad 506 verdeutlicht diesen Signalpfad. Das Medium reflektiert das Signal, woraufhin sich dieses in Richtung des Füllstandmessgerätes 401 fortpflanzt. Da die Öffnung 513 des Domschachtes 503 im Verhältnis zur Behälterdecke 502 klein ist, wird nur ein sehr kleiner Teil des Signals als Füllstandecho $E_L$ 515 auf die Echokurve 514 abgebildet. Die Signalpfade 507 und 508 verdeutlichen diesen Ausbreitungsweg. Der weitaus größere Teil der Signalenergie wird an der Behälterdecke reflektiert (Signalpfad 509), und gelangt erneut zur Füllgutoberfläche. Auf diese Weise bildet sich nach Passage der Signalpfade 509, 510, und 511 ein erstes Vielfachecho $E_{ML1}$ 516 auf die Echokurve ab. Die vorgestellten Zusammenhänge für Domschächte gelten entsprechend auch für die Vielfachechos höherer Ordnung, was durch den Signalpfad 512 angedeutet wird, aber auch für die Vielfachechos der Bodenreflektion.

In industriellen Anwendungen finden sich darüber hinaus auch Konstellationen, die durch die Einführung einer negativen Domschachtlänge in vorteilhafter Weise verarbeitet werden können. Figur 6 zeigt einen zugehörigen Anwendungsfall. Das Füllstandmessgerät 401 wird oberhalb eines nach oben offenen Behälters 601 montiert, wobei sich die gesamte Messanordnung beispielsweise in einer Halle befindet, so dass sich über der Anordnung ein metallisches Flachdach 602 befinden möge. Der Abstand der Bezugsebene 603 des Füllstandmessgerätes 401 vom Hallendach 602 wird im Ablauf der Signalverarbeitung des Füllstandmessgerätes 401 als negative Domschachtlänge mit einer physikalischen Länge von $d_D < 0$ berücksichtigt. Die Anwendung möge daher im Kontext der vorliegenden Erfindung einen Domschacht aufweisen, wobei dieser eine negative Länge besitzen möge. Werden vom Füllstandmessgerät 401 nun Messungen vorgenommen, so ergeben sich Signalpfade gemäß der Darstellung des Signalpfaddiagramms 604. Die direkte Reflektion der Füllgutoberfläche, welche durch die Signalpfade 605 und 606 verdeutlicht wird, bildet sich in der Echokurve als Füllstandecho $E_L$ 610 ab. Der weitaus größere Teil der Signalenergie breitet sich jedoch bis zum Hallendach 602 aus, wird von diesem reflektiert und führt nach erneuter Reflektion an der Füllgutoberfläche zum ersten Mehrfachecho $E_{ML1}$ 611 innerhalb der Echokurve 612.

Die Signalausbreitung, welche zu diesem Echo führt, wird durch die Signalpfade 607, 608 und 609 angedeutet.

In der Praxis mögen Mehrfach- und Bodenechos oft zu deutlichen Problemen führen. Ausgehend von den oft anzutreffenden Verhältnissen der Echokurve 302 der Figur 3 identifizieren Füllstandmessgeräte im einfachsten Fall stets das größte Echo der Echokurve 302 als das von der Füllgutoberfläche verursachte Füllgutecho. Im Anwendungsfall der Figur 3 führt dies zu einer Fehlmessung. Weiterhin ist keine Abhilfe durch Verwendung einer Störspeicherung möglich, da sich die Mehrfachechos $E_{ML1}$ und $E_{ML2}$ 305, 306 bei Veränderung der Lage der Füllgutoberfläche aus dem statisch angelegten Störechoprofil heraus bewegen würden.

Gegenwärtig diskutierte Lösungsansätze sehen Verfahren vor, welche unter den Echos einer Echoliste genau diejenigen erkennen, welche durch mehrfache Reflexion verursacht werden.

Viele Ansätze zur Erkennung von Mehrfachechos weisen deutliche Schwächen auf.

So kann eine Mehrfachechoerkennung auf Basis der Position einzelner Echos dann funktionieren, wenn der Bezugspunkt des Sensors der gemeinsamen Reflexionsstelle der Mehrfachechos an der Behälterdecke entspricht. Bei Montage des Füllstandmessgerätes in einem Domschacht oder bei nach oben offenen Behältern führt das Verfahren zu keinen sinnvollen Ergebnissen. Es ist kein Verfahren bekannt, das auf die Problematik einer Domschachtlänge ungleich 0 eingeht.

Weiterhin setzen verschiedene Ansätze voraus, dass bereits eine Erkennung des Füllstandechos, welches von der Medienoberfläche im Behälter erzeugt wird, vorab stattgefunden hat. In Situationen wie denen aus Figur 3 führen diese Ansätze nicht zu einer sicheren Klassifikation der gefundenen Echos.

Darüber hinaus setzen Ansätze zur Erkennung von Mehrfachechos auf Basis von Geschwindigkeitsvergleichen oder Trendgeraden voraus, dass zur Ermittlung der Geschwindigkeit oder des Trends eines Echos eine sichere Zuordnung oder Gruppierung von Echos mit identischer Reflexionsstelle im Behälter erfolgen kann. Es mag einem Fachmann offensichtlich erscheinen, dass eine solche Gruppierung, wie sie beispielsweise durch ein Tracking - Verfahren realisiert werden kann, stets mit Fehlern behaftet sein kann.

Solche Ansätze zur Erkennung von Mehrfachechos stellen demzufolge keine robusten Verfahren bereit, welche im Rahmen der Füllstandmessung unter realen Bedingungen zu Verbesserungen führen würden. Weiterhin ist es mit den vorgenannten Verfahren nicht möglich, neben der Erkennung von Mehrfachreflexionen der Füllgutoberfläche auch Mehrfachreflexionen einer Trennschicht oder eines Behälterbodens zu analysieren.

Gemäß einem Aspekt der vorliegenden Erfindung wird ein robustes Verfahren und eine Vorrichtung zur Erkennung von Mehrfach- und Bodenechos bereitgestellt. Gemäß einem weiteren Aspekt der vorliegenden Erfindung wird ein Verfahren und eine Vorrichtung zur Erkennung von unkorrelierten Echos oder Antikorrelationsechos angegeben.

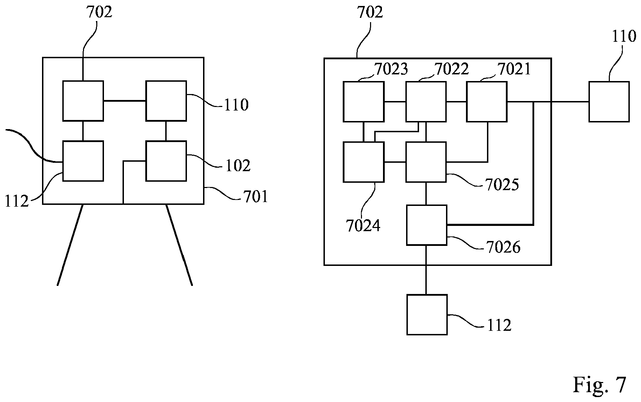

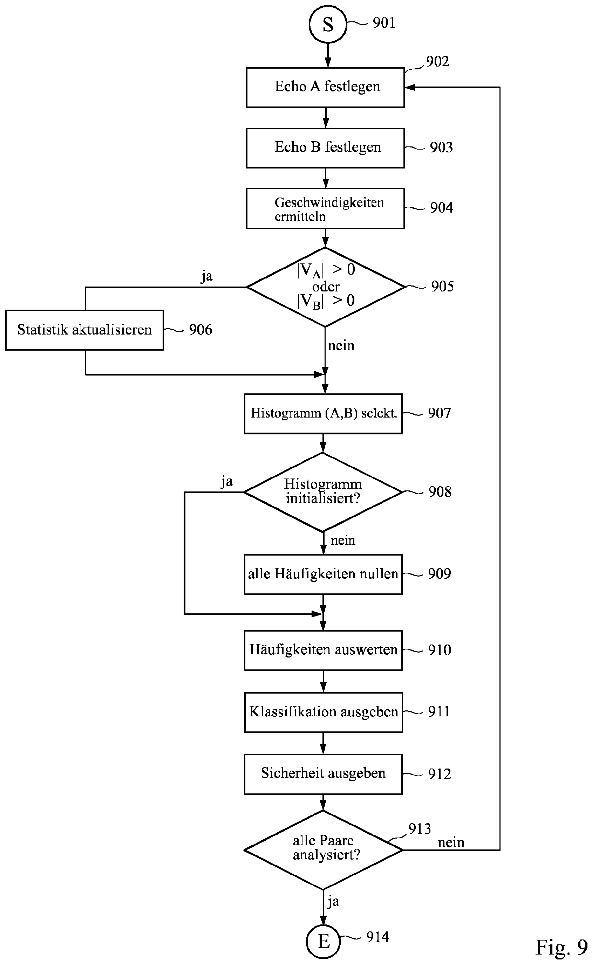

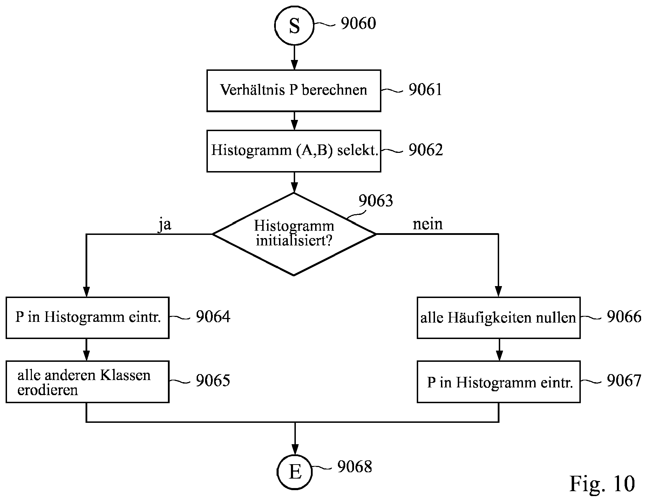

Die Ablaufdiagramme der Figur 9 und der Figur 10 zeigen beispielhaft eine mögliche Abfolge von Schritten zur Durchführung des Verfahrens gemäß einem Aspekt der Erfindung. Das Blockdiagramm der Figur 7 zeigt ein Beispiel für eine Vorrichtung zur Abarbeitung der Verfahrensschritte.

Das Füllstandmessgerät 701 entspricht in weiten Teilen dem in Bezug auf Figur 1 beschriebenen Füllstandmessgerät 101, unterscheidet sich jedoch durch eine modifizierte Auswerteeinrichtung 702 von bislang genutzten Vorrichtungen.

Die erfindungsgemäße Auswerteeinrichtung 702 möge aus einer Echoidentifikationseinrichtung 7021, einer Trackingeinrichtung 7022, einer Geschwindigkeitsermittlungseinrichtung 7023, einer Statistikeinrichtung 7024, einer Entscheidungseinrichtung 7025 sowie einer Echovermessungseinrichtung 7026 bestehen.

Die Echoidentifikationseinrichtung 7021 untersucht die von der Echokurvenerfassungseinrichtung 102, 110 übergebene Echokurve auf darin enthaltene Echos 205, 206, 207, 208, 209. Die Trackingeinrichtung 7022 nimmt eine Gruppierung von Echos aus verschiedenen Messzyklen derart vor, dass Echos, welche von der gleichen Reflexionsstelle im Behälter verursacht werden, und welche auf Grund gleicher Signalpfade entstehen, zu Gruppen zusammengefasst werden. Auf Basis dieser Gruppen, auch Tracks genannt, kann beispielsweise die Geschwindigkeit eines Echos sicher ermittelt werden. Die Geschwindigkeitsermittlungseinrichtung 7023 ermittelt zumindest eine Kennzahl für die Geschwindigkeit der Echos der aktuellen Echokurve. Eine erfindungsgemäße Statistikeinrichtung 7024 überwacht fortlaufend die zu einzelnen Echos der Echokurve erfassten Geschwindigkeitsmaße, um daraus ein Histogramm über das Verhältnis der Geschwindigkeitswerte zweier Echos zu bilden. Auf Basis dieser ermittelten Statistikwerte mag die Statistikeinrichtung für jedes Echo der Echokurve eine Klassifikation angeben, anhand derer eine Zuordnung zu einer der Klassen Mehrfacheecho, Bodenecho oder Antikorrelationsecho in Bezug auf eine postulierte oder tatsächliche Lage der Füllgutreflektion erfolgen kann. Die Entscheidungseinrichtung 7025 mag auf Basis aller bislang ermittelten Werte eine Entscheidung treffen, welches Echo der Echokurve von der Füllgutretlektion erzeugt wurde. Anhand der Echovermessungseinrichtung 7026 kann die exakte Position des Echos ermittelt werden. Weiterhin können Einflüsse eines Überlagerungsmediums kompensiert werden.

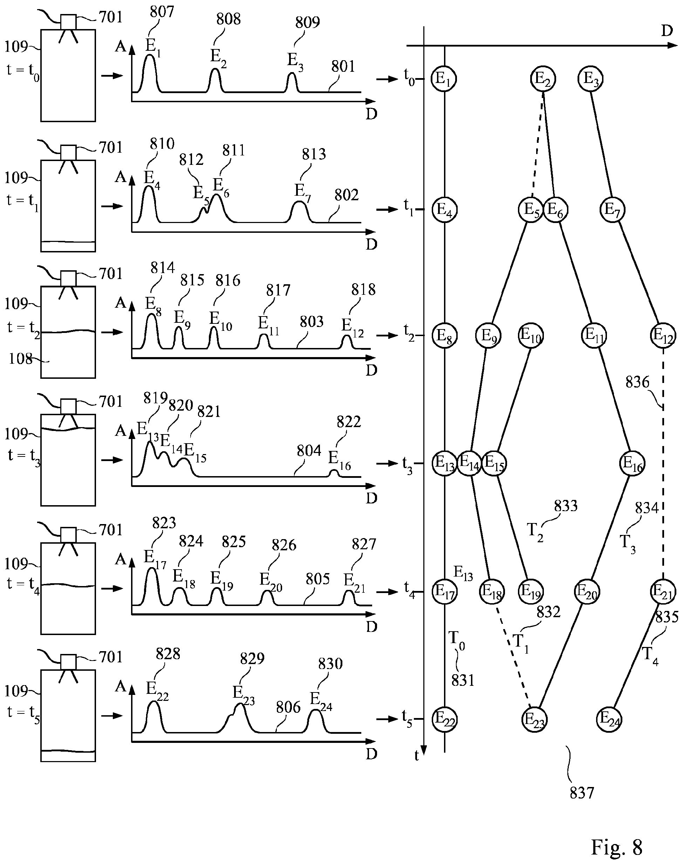

In den Darstellungen der Figur 8 wird eine Folge von Messzyklen dargestellt, wie sie mit einem erfindungsgemäßen Messgerät 701 durchgeführt werden können. Der zu überwachende Behälter 109 wird zu fortlaufenden Zeitpunkten $t_0 < t_1 < t_2 < t_3 < t_4 < t_5$ zunächst mit einem Medium 106 befüllt, und anschließend wieder entleert. Die von einem erfindungsgemäßen Füllstandmessgerät 701 zu den jeweiligen Zeitpunkten erfassten Echokurven 801, 802, 803, 804, 805, 806 sind direkt neben der Darstellung des Behälters zum jeweiligen Zeitpunkt skizziert.

Die Echokurve 801 des leeren Behälters 109 weist neben dem Antennenecho $E_1$ 807 lediglich ein vorn Boden verursachtes Echo $E_2$ 808 und ein weiteres Vielfacheecho $E_3$ 809 der Bodenreflexion auf. Diese Echos werden von der Echoidentifikationseinrichtung erfasst, wobei zu diesem Zeitpunkt noch keinerlei Klassifikation der Echos stattfindet. Die Echos werden daher vorzugsweise mit unterschiedlichen Indizes versehen, um sie algorithmisch weiter verarbeiten zu können.

Auf Basis der identifizierten Echos $E_1$ 807, $E_2$ 808 und $E_3$ 809 wird von der Trackingeinrichtung 7022 in einem weiteren Verarbeitungsschritt versucht, die identifizierten Echos in einen logischen Zusammenhang zu bereits früher identifizierten Echos zu stellen. Offenbarungen zur Durchführung eines Tracking - Verfahrens im Rahmen der Füllstandmesstechnik finden sich beispielsweise in WO 2009/037000. Die Trackingeinrichtung 7022 des Füllstandmessgerätes 701 möge auf Basis der Antennenreflektion $E_1$ einen ersten Track $T_0$ 831 initialisieren. Weiterhin möge ein Track $T_3$ 834 zur Verfolgung des Bodenechos $E_2$ 808 sowie ein Track $T_4$ 835 zur Verfolgung des Vielfachechos $E_3$ 809 zum Zeitpunkt $t = t_0$ initialisiert werden.

Zum Zeitpunkt $t = t_1$ möge der Behälter leicht befüllt sein. Die vom Füllstandmessgerät erfasste Echokurve 802 ist in der Figur 8 dargestellt. Die Trackingeinheit des Füllstandmessgerätes 701 setzt die bereits begonnenen Tracks $T_0$ 831, $T_3$ 834 und $T_4$ 835 mit den jeweils von der gleichen Reflexionsstelle im Behälter stammenden Echos der aktuellen Messung fort. Weiterhin wird zur Überwachung des neu hinzugekommen Füllstandechos $E_5$ 812 ein neuer Track $T_1$ 832 initialisiert.

Im weiteren Verlauf wird der Behälter zunehmend gefüllt. Zum Zeitpunkt $t = t_2$ möge der Behälter halb gefüllt sein. Entsprechend den Ausführungen zur Figur 2 bildet sich in diesem Stadium sowohl eine Mehrfachreflexion $E_{10}$ 816 der Füllgutoberfläche als auch eine Mehrfachreflexion $E_{12}$ 818 des Behälterbodens auf die erfasste Echokurve 803 ab. Die neu hinzugekommen Mehrfachreflexion der Füllgutoberfläche führt zur Neuinitialisierung eines Tracks $T_2$ 833, wohingegen die bereits bestehenden Tracks $T_0$ 831, $T_1$ 832, $T_3$ 834 und $T_4$ 835 mit den Echos der jeweils identischen Reflexionsstelle im Behälter fortgesetzt werden.

Der nahezu vollständig mit dem Medium 106 gefüllte Behälter wird zum Zeitpunkt $t = t_3$ dargestellt. Aufgrund der hohen Dämpfung der verwendeten Messsignale des Füllstandmessgerätes 701 innerhalb des Mediums 106 möge es nun nicht mehr möglich sein, die erste Mehrfachreflexion des Behälterbodens zu erfassen. Das Tracking~Verfahren ist jedoch in der Lage, das Fehlen dieses Echos zu berücksichtigen, beispielsweise durch Einfügen einer unsichtbaren Strecke 836 innerhalb des Tracks $T_4$ 835. Die anderen Tracks werden mit den erfassten Echos der Echokurve 804 gemäß obiger Beschreibung erweitert.

Während der anschließenden Entleerung des Behälters taucht die erste Mehrfachreflexion $E_{21}$ 827 des Behälterbodens zum Zeitpunkt $t = t_4$ wieder auf. Der zugehörige Track $T_4$ 835 wird mit dem Mehrfacheecho der Bodenreflektion wieder fortgesetzt. Weiterhin werden die bestehenden Tracks in bekannter Art und Weise erweitert.

Zu jedem der zu den Zeitpunkten $t_0 < t_1 < t_2 < t_3 < t_4 < t_5$ durchgeführten Messzyklen liegt im Sensor eine Trackliste vor, welche von der Trackingeinrichtung 7022 bereitgestellt wird, und welche die aktuellen Tracks 837 zum jeweiligen Zeitpunkt beschreibt. Die Trackliste mag beispielsweise aus Vektoren bestehen, welche für jeden Track die Orte des jeweils zugeordneten Echos beschreiben. Es mag aber auch möglich sein, eine speicheroptimierte Darstellung zu verwenden, wie sie in der EP 09 172 769 beschrieben wird. Mit dem dort vorgeschlagenen Verfahren wird auch eine Möglichkeit bereitgestellt, einen Track, also eine Abfolge von Echos mit identischem Reflexionsursprung, in zeitliche Abschnitte zu unterteilen, in welchen das zugehörige Echo eine nahezu konstante Geschwindigkeit oder eine nahezu konstanten Geschwindigkeitsvektor aufweist.

Im Rahmen der weiteren Signalverarbeitung wird vorzugsweise auf Basis der Tracks 831, 832, 833, 834, 835 eine Analyse auf Mehrfach- und Bodenechos durchgeführt. Der Darstellung 837 der Tracks kann rein optisch schon entnommen werden, dass die Echos des

Tracks $T_2$ 833 Mehrfachechos der jeweiligen Echos des Tracks $T_1$ 832 sind, da sich Track $T_2$ gleichmäßig in die identische Richtung bewegt wie Track $T_1$. Weiterhin kann der Darstellung entnommen werden, dass die Echos des Tracks $T_3$ den Boden des Behälters beschreiben, da sie sich im Gegentakt zu der Bewegungsrichtung der Füllstandechos des Track $T_1$ bewegen.

Im Sensor werden diese Zusammenhänge durch das Zusammenspiel der Geschwindigkeitsermittlungseinrichtung 7023 und der Statistikeinrichtung 7024 analysiert. Ein geeigneter Ablauf zur Durchführung des Verfahrens wird in Figur 9 aufgezeigt.

Das Verfahren zur Analyse der erfassten Echos auf Mehrfach- und Bodenechoeigenschaften beginnt im Startzustand S 901. Im Schritt 902 wird ein erstes Echo aus der Vielzahl erfasster Echos der aktuellen Messung selektiert. Das selektierte Echo A wird erfindungsgemäß aufgrund fehlender Kenntnisse der genauen Zusammenhänge im Behälter für den anlaufenden Analyseschritt als Füllgutecho postuliert. Es wird nachfolgend also angenommen, dass das selektierte Echo von einer Reflexion an der Füllgutoberfläche 105, 309 verursacht wurde. Nachfolgend wird im Schritt 903 ein weiteres Echo der Echoliste selektiert, wobei dieses Echo B auf Mehrfach- und Bodenechoeigenschaft bezogen auf die Hypothese, Echo A sei das Füllgutecho, untersucht wird. Da sowohl Mehrfach- als auch Bodenechos stets einen Distanzwert aufweisen, der größer ist als der Distanzwert der aktuellen Füllgutreflexion, kann in diesem Schritt die Berechnung dadurch vereinfacht werden, dass nur Echos B mit einer Distanz größer der Distanz des Echos A selektiert werden.

Nachfolgend wird eine bevorzugte Ausgestaltung des Verfahrens detaillierter beschrieben. Nun kann die Erkennung von Mehrfachechos auf Basis von Positionsvergleichen oder auch von Geschwindigkeitsvergleichen zweier Echos durchgeführt werden. Aufgrund der allgemein vorhandenen Problematik einer unbekannten Domschachtlänge wird nachfolgende Variante des erfindungsgemäßen Verfahrens ausschließlich anhand der Verarbeitung der Geschwindigkeiten zweier Echos vorgestellt. Es mag jedoch auch möglich sein, das Verfahren und insbesondere die Erstellung einer Statistik anhand von Kennwerten zu realisieren, welche aufgrund der Position einzelner Echos ermittelt werden. Es mag zudem möglich sein, Positions- und Geschwindigkeitseigenschaften zu kombinieren, um daraus in Verbindung mit der Statistikeinrichtung Informationen über Mehrfach- und Bodenechoeigenschaften zu generieren.

Die Geschwindigkeitsermittlungseinrichtung berechnet im Schritt 904 die Geschwindigkeit der beiden selektierten Echos A und B. Diese Analyse kann auf Basis lokaler Steigungen eines Tracks erfolgen.

Alternativ kann die Geschwindigkeit $V_E$ eines Echos E, eines Tracks oder einer Reflexion aus einer Positionsverschiebung des Echos, Tracks oder der Reflexion zwischen zwei verschiedenen Messzyklen des Füllslandmessgerätes nach folgendem Schema ermittelt, werden:

$$V_E = \frac{D_E(t_2) - D_E(t_1)}{t_2 - t_1}$$

wobei:

| | |
|---|---|
| $D_E(t_2)$ | Elektrische Distanz zum Echo, Track oder der Reflektion im Messzyklus 2 |
| $D_E(t_1)$ | Elektrische Distanz zum Echo, Track oder der Reflektion im Messzyklus |
| $t_2$ | Zeitpunkt, zu welchem Messzyklus 2 durchgeführt wird |
| $t_1$ | Zeitpunkt, zu welchem Messzyklus durchgeführt wird. |

Durch Anwendung von Regressionsverfahren können auch mehrere Positionen der Echos eines Tracks verwendet werden, um die Geschwindigkeit eines Echos zu ermitteln. Es mag aber auch möglich sein, die Geschwindigkeit für ganze Abschnitte eines Tracks, in welchen die Geschwindigkeit der Echos nahezu konstant ist, zu ermitteln. Das in EP 2309235 A1 beschriebene Verfahren kann zur Überführung eines Tracks in Abschnitte konstanter Geschwindigkeiten verwendet werden.

Es mag aber auch möglich sein, auf Basis einer Doppleranalyse oder durch Auswertung von Phasenverschiebungen zeitlich aufeinander folgender Echokurven zumindest eine Kennzahl für die Geschwindigkeit eines Echos zu ermitteln. Eine Kennzahl für die Geschwindigkeit eines Echos mag der Betrag der Geschwindigkeit sein. Weiterhin mag eine Kennzahl für die Geschwindigkeit eines Echos die Richtung der Geschwindigkeit sein.

Im Verfahrensschritt 905 wird nun untersucht, ob sich zumindest eines der beiden Echos bewegt.

Da sich das vorliegende Ausführungsbeispiel aufgrund der allgemein vorhandenen Problematik einer unbekannten Domschachtlänge für die Erkennung von Mehrfach- und Bodenechos nicht auf die absoluten Positionsangaben der einzelnen Echos stützt, muss zumindest eines der betrachteten Echos eine Bewegung aufweisen, um im weiteren Ablauf eine Analyse auf Mehrfach- und Bodenechoeigenschaften durchführen zu können.

Weist zumindest eines der beiden selektierten Echos eine Bewegung auf, so wird im Schritt 906 innerhalb der Statistikeinrichtung 7024 eine Aktualisierung der zu den selektierten Echos gehörenden Geschwindigkeitsstatistik durchgeführt.

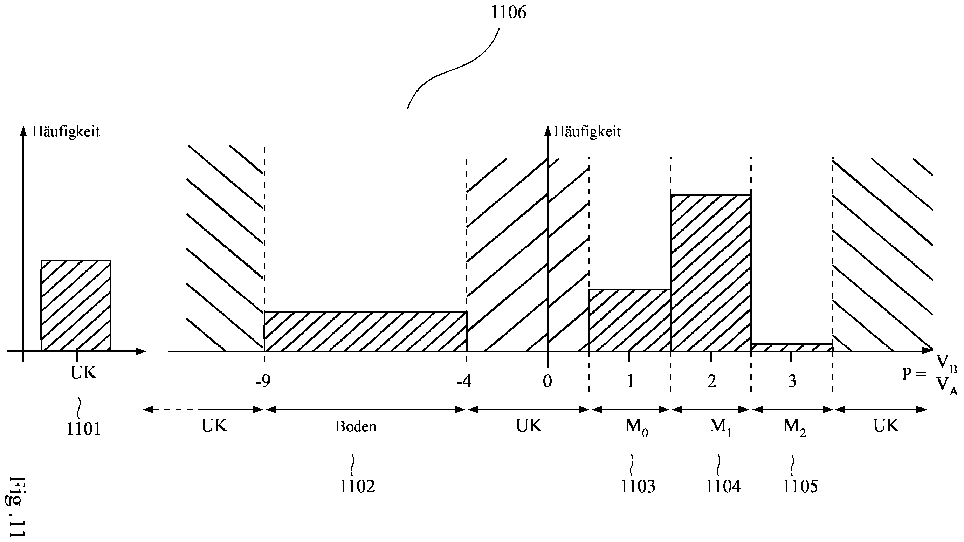

Die Statistikeinrichtung 7024 führt für alle möglichen Kombinationen von Mehrfach- und Bodenechos der aktuellen Messung jeweils eine Statistik in Form eines Histogramms gemäß dem Schema der Figur 11. Im Schritt 906 wird die zu den aktuell selektierten Echos A und B gehörende Statistik aktualisiert. Figur 10 zeigt die dazu erforderlichen Schritte.

Im Schritt 9061 wird das Verhältnis P der Geschwindigkeiten der beiden aktuell selektierten Echos A und B nach folgendem Schema errechnet:

$$P_{A,B} = \begin{cases} \dfrac{V_B}{V_A} & \text{falls } |V_A| > 0 \\ 0 & \text{sonst} \end{cases}$$

wobei $V_A$ die Geschwindigkeit des postulierten Füllgutechos A und $V_B$ die Geschwindigkeit des auf Mehrfach- und Bodeneigenschaften zu untersuchenden Echos B ist.

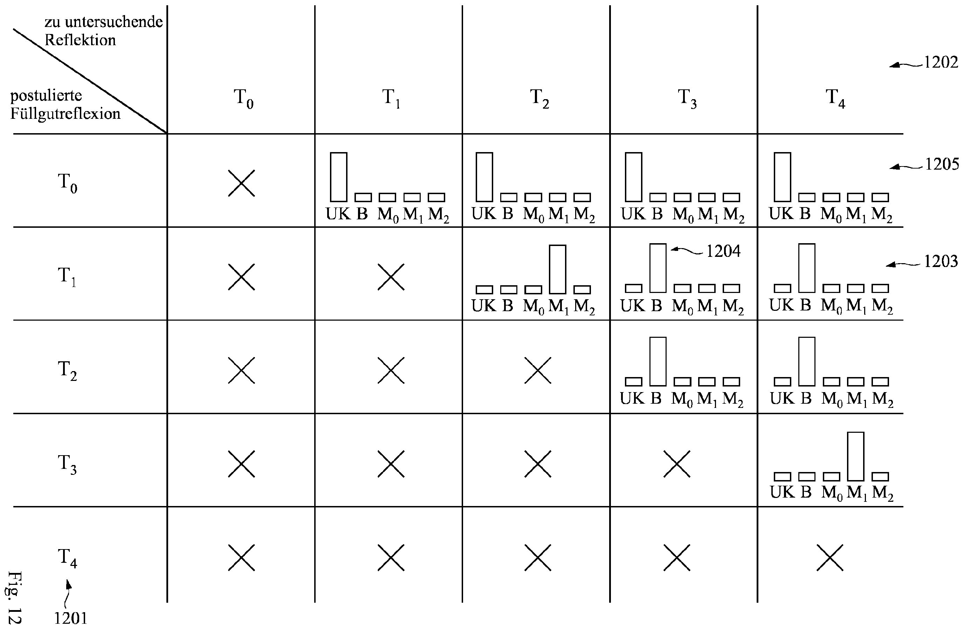

Im Verfahrensschritt 9062 wird das zu Reflektion A und Reflektion B gehörende Histogramm aus dem Speicher der Statistikeinheit selektiert. Die Statistikeinheit bevorratet zu diesem Zweck eine Vielzahl an Histogrammen, wie sie in Figur 12 dargestellt wird. Insbesondere hält die Statistikeinheit für jede Kombination zweier Echos oder Tracks, die der Einschränkung bezüglich möglicher Orte entspricht, ein Histogramm gemäß dem Schema der Figur 11 vor.

Im Schritt 9063 wird überprüft, ob das zu den selektierten Reflektionen A und B gehörende Histogramm in einem der vorausgegangenen Messzyklen bereits initialisiert wurde.

Ist das Histogramm bereits vorbelegt, so wird das aktuell ermittelte Geschwindigkeitsverhältnis P im Schritt 9064 in das Histogramm eingetragen. Anschließend werden alle anderen Klassen des Histogramms erodiert 9065.

Die Schritte 9064 und 9065 werden anhand eines erfindungsgemäßen Histogramms gemäß der Figur 11 nachfolgend genauer erläutert.

Ergibt die Berechnung, dass sich die beiden Echos mit ungefähr gleicher Geschwindigkeit bewegen, was einem Geschwindigkeitsverhältnis von P im Bereich von 0.5 bis 1.5 entspricht, so sprechen die aktuellen Echoverhältnisse dafür, dass das Echo B ein Mehrfachecho 0. Ordnung des Echos A oder der Reflektion A ist. Demzufolge wird die Spalte 1103 für M0 um eins oder einen vorgebbaren Betrag erhöht. Gleichzeitig spricht diese Klassifikation gegen alle anderen denkbaren Klassifikationen. Die Spalten für Unkorreliertheit UK, 1101, Boden 1102, Mehrfachecho 1. Ordnung M1, 1104 sowie Mehrfachecho 2. Ordnung M2, 1105 werden daher um einen vorgebbaren Betrag verringert.

Ergibt die Berechnung, dass sich Echo B etwa doppelt so schnell bewegt wie Echo A, was einem Geschwindigkeitsverhältnis von P im Bereich von 1.5 bis 2.5 entspricht, so sprechen die aktuellen Echoverhältnisse dafür, dass das Echo B ein Mehrfachecho 1. Ordnung ist. Demzufolge wird die Spalte für M1 1104 um eins oder einen vorgebbaren Betrag erhöht. Gleichzeitig spricht diese Klassifikation gegen alle anderen denkbaren Klassifikationen. Die Spalten für Unkorreliertheit UK, 1101, Boden 1102 , Mehrfachecho 0. Ordnung M0, 1103 sowie Mehrfachecho 2. Ordnung M2, 1105 werden daher um einen vorgebbaren Betrag verringert.

Ergibt die Berechnung, dass sich Echo B etwa drei Mal so schnell bewegt wie Echo A, was einem Geschwindigkeitsverhältnis von P im Bereich von 2.5 bis 3.5 entspricht, so sprechen die aktuellen Echoverhältnisse dafür, dass das Echo B ein Mehrfachecho 2. Ordnung ist. Die Eintragung in das Histogramm geschieht nach obigem Schema.

Für den Fall, dass sich bei der Berechnung ein negatives Verhältnis P im Bereich von -9 bis -4 ergibt, kann gefolgert werden, dass Echo B ein Bodenecho bezogen auf die Reflexion A ist. Dementsprechend wird die Spalte für Boden 1102 um eins oder einen vorgebbaren Betrag erhöht. Gleichzeitig spricht diese Klassifikation gegen alle anderen denkbaren Klassifikationen. Die Spalten für Unkorreliertheit UK, 1101, Mehrfachecho 0. Ordnung M0, 1103 Mehrfachecho 1. Ordnung M1, 1104 sowie Mehrfachecho 2. Ordnung M2, 1105 werden daher um einen vorgebbaren Betrag verringert.

Die Begrenzung möglicher negativer Geschwindigkeitsverhältnisse auf den Bereich zwischen -9 und -4 kann apphkationsspezifisch verändert werden. In einer Vielzahl von Anwendungen hat sich aber gezeigt, dass reale Bodenechos zu einem Verhältnis P im angegebenen Bereich führen.

Weiterhin wird im dargestellten Histogramm postuliert, dass nur Vielfachechos bis zu einer Ordnung von 2 in der aktuellen Anwendung auftreten können. Selbstverständlich lässt sich das Verfahren auch dahingehend erweitern, dass weitere Spalten für Vielfachechos höherer Ordnung vorgesehen werden. Auf Basis der bislang beobachteten Verhältnisse in realen Anwendungen erscheint eine Begrenzung auf die Analyse bis zu Vielfachechos zweiter Ordnung aber sinnvoll und ausreichend.

Ergibt die Analyse der Geschwindigkeitsverhältnisse zwischen Echo A und Echo B keinerlei Zuordnung zu einem der Bereiche des Bodens oder der Mehrfachreflexionen M0, M1, M2, so muss davon ausgegangen werden, dass Echo B in keinerlei Beziehung zu Echo A steht, die beiden Echos also gänzlich unkorreliert sind. Dementsprechend wird die Spalte für Unkorreliertheit UK, 1101 um eins oder einen vorgebbaren Betrag erhöht. Gleichzeitig spricht diese Klassifikation gegen alle anderen denkbaren Klassifikationen. Die Spalten für Boden 1102, Mehrfachecho 0. Ordnung M0, 1103 Mehrfachecho 1. Ordnung M1, 1104 sowie Mehrfachecho 2. Ordnung M2, 11 05 werden daher um einen vorgebbaren Betrag verringert.

Ergibt sich in der Überprüfung des Schrittes 9063, dass das Histogramm noch nicht initialisiert ist, d.h. das selektierte Echo A oder das selektierte Echo B im aktuellen Messzyklus noch keiner der bislang im Sensor verarbeiteten Reflexionsstellen oder Tracks zugeordnet werden konnte, so muss die Analyse anhand des Histogramms der Figur 11 neu initialisiert werden. Dazu werden im Schritt 9066 zunächst alle Eintragungen des Histogramms auf 0 gesetzt. Anschließend wird im Schritt 9066 entsprechend der oben dargestellten Weise das Geschwindigkeitsverhältnis der aktuellen Messung im Histogramm eingetragen.

Im Schritt 907 der Figur 9 wird das zu den selektierten Echos A und B gehörende Histogramm 1106 wieder selektiert. In den Schritten 908 und 909 wird überprüft, ob das Histogramm bereits initialisiert ist, und bei Notwendigkeit eine Initialisierung nach obigem Schema durchgeführt.

Im Schritt 910 werden die Häufigkeiten des aktuellen Histogramms untersucht. Bezugnehmend auf das Beispiel der Figur 11 wird analysiert, welche der Klassifikationen 1101, 1102, 1103, 1104, 1105 die absolut größte Häufigkeit aufweist. Im vorliegenden Fall wird in der Spalte des ersten Mehrlchechos M1, 1104 die größte Häufigkeit festgestellt. Im Schritt 911 wird daher das aktuell betrachtete Echo B als Mehrfachecho 1. Ordnung klassifiziert. Weiterhin wird wiederum bezugnehmend auf Figur 11 analysiert, welche Klassifikation 1101, 1102, 1103, 1105 die zweitgrößte absolute Häufigkeit besitzt. Im vorliegenden Beispiel mag das die Klassifikation in "unkorrelierte Echos" oder "Antikorrelationsecho" 1101 sein. Aus der Differenz der Häufigkeit der aktuellen Klassifizierung zum Betrag der Häufigkeit der zweitgrößten Klassifikation wird im Schritt 912 ein Sicherheitsniveau errechnet und ausgegeben. Da im vorliegenden Beispiel die Häufigkeit für das Mehrfachecho erster Ordnung nur wenig größer ist als die Häufigkeit für "unkorrelierte Echos" kann der bereitgestellten Klassifikation kein allzu großes Vertrauen entgegengebracht werden, was sich in einem niedrigen Wert für die Sicherheit der Klassifikation widerspiegelt.

Im Schritt 913 wird die Analyse für das nächste Echopaar initiiert, falls noch nicht alle logisch möglichen Echopaare betrachtet wurden. Das Verfahren endet im Schritt 914.

Das vorgestellte Verfahren setzt keinerlei Informationen darüber voraus, welches der aktuell identifizierten Echos das Füllgutecho ist. Vielmehr wird sukzessive eine Vielzahl von Echos als mögliche Füllgutreflexion postuliert. Anschließend werden alle Echos mit einer Distanz größer der aktuell postulierten Füllgutretlexion auf Mehrfach- und Bodenechoeigenschaften hin untersucht.

Figur 12 zeigt die sich dabei ergebende kombinatorische Vielfalt in der Statistikeinheit aufbauend auf den Verhältnissen aus Figur 8. Aus Vereinfachungsgründen wird im vorgestellten Beispiel die Untersuchung auf Mehrfach - und Bodenechoeigenschatlen nur für Echos vorgenommen, welche von der Trackingeinrichtung einem Track zugeordnet werden konnten.

Die Darstellung verdeutlicht, dass alle bestehenden Tracks als Füllgutretlexion postuliert werden 1201. Weiterhin werden auch alle bestehenden Tracks auf Mehrfach- und Bodenechoeigenschaften hin untersucht 1202. Aufgrund der Einschränkung, dass Mehrfach- und Bodenechos nur in einer Entfernung größer dem Ort der aktuell postulierten Füllgutreflexion auftreten können, ergibt sich nur für die Kombinationen der rechten oberen Hälfte 1203 der Tabelle eine Auswertung. Die physikalisch nicht möglichen Kombinationen werden nicht durch Histogramme ausgewertet, da sie garantiert keine Mehrfach- oder Bodenechos bezogen auf die jeweils postulierte Füllgutreflexion sein können. Nicht mögliche Kombinationen sind in der Darstellung der Figur 12 durch X gekennzeichnet.

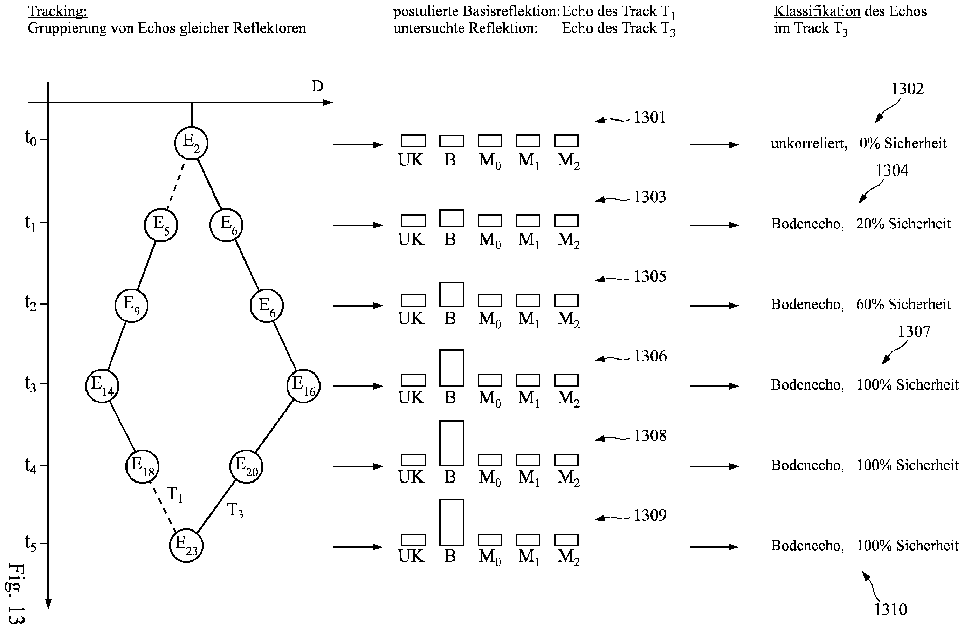

Figur 13 zeigt anhand einer konkret zu analysierenden Kombination 1204 für die Echos des Tracks T1, welcher als Füllstandtrack postuliert werden mag, und die Echos des Tracks T3, welcher auf Mehrfach- und Bodenechoeigenschaften hin untersucht werden soll, die zeitliche Entwicklung des Histogramms 1106 zu den Zeitpunkten $t_0 < t_1 < t_2 < t_3 < t_4 < t_5$. Die Verläufe der Echos und die Gruppierung zu Tracks mag jenen des Beispiels der Figur 8 entsprechen.

Zum Zeitpunkt t = $t_0$ befindet sich das Histogramm 1301 im Initialisierungszustand, d.h. alle Häufigkeiten sind auf den Wert 0 gesetzt. Da sich zu diesem Zeitpunkt noch keine der Merkmalsklassen UK, B, M0, M1, M2 als dominierende Klasse aus dem Histogramm hervorhebt, erfolgt eine Klassifikation des Echos $E_2$ derart, dass dieses "unkorreliert" in Bezug auf die postulierte Füllgutreflexion ist, wobei diese Aussage keinerlei Zuverlässigkeit oder Sicherheit 1302 besitzt.

In der weiteren Entwicklung zeigt das Histogramm 1303 zum Zeitpunkt t = $t_1$ eine erste Häufung in der Merkrnalsklasse B, welche für eine Bodenechobeziehung zwischen dem Echo $E_6$ des Tracks T3 und dem postulierten Füllgutecho $E_5$ des postulierten Füllstandtracks T5 spricht. Die Klassifikation des Echos $E_6$ zu diesem Zeitpunkt spricht also für die Klasse Bodenecho 1304, wobei diese Klassifikation aufgrund der nicht allzu deutlich ausgeprägten Häufung der Merkmalsklasse B nur mit beispielsweise 20% Sicherheit getroffen werden kann.

Im weiteren Verlauf wird die Häufung innerhalb der Merkmalsklasse B zu den Zeitpunkten t = $t_2$ und t = $t_3$ 1305, 1306 immer stärker ausgeprägt, weshalb zum Zeitpunkt t = $t_3$ eine Klassifikation des Echos $E_{26}$ als Bodenecho mit 100% Sicherheit oder Aussagekraft 1307 erfolgen kann.

Selbst nach einem Wechsel der Befüllungsrichtung ergibt die Analyse der Geschwindigkeitsbeziehung der Echos des Tracks T3 zu den Echos des Tracks T1 keinerlei andere Klassifikation. Die zugehörigen Histogramme 1308, 1309 weisen noch immer das Bodenecho als dominierende Merkmalsklasse B auf, dementsprechend bleibt die vorgenommene Klassifikation 1310 mit 100% Sicherheit erhalten.

Es sei an dieser Stelle darauf hingewiesen, dass die einmal erworbene Information darüber, ob ein Echo ein Boden- oder Vielfachecho ist, auch in Zeiträumen erhalten bleibt, in welchen weder eine Befüllung noch eine Entleerung des Behälters vorgenommen wird. Im Verfahrensschritt 905 der Figur 9 würde festgestellt werden, dass weder Echo A noch Echo B eine Bewegung aufweisen, weshalb das bisherige Histogramm unverändert erhalten bliebe. Dies stellt einen signifikanten Unterschied zu bekannten Verfahren dar, und ermöglicht die besonders vorteilhafte Anwendung des Verfahrens im Bereich der Füllstandmessung, wo stationäre Verhältnisse immer wieder vorkommen, beispielsweise beim Stillstand einer Anlage über das Wochenende.

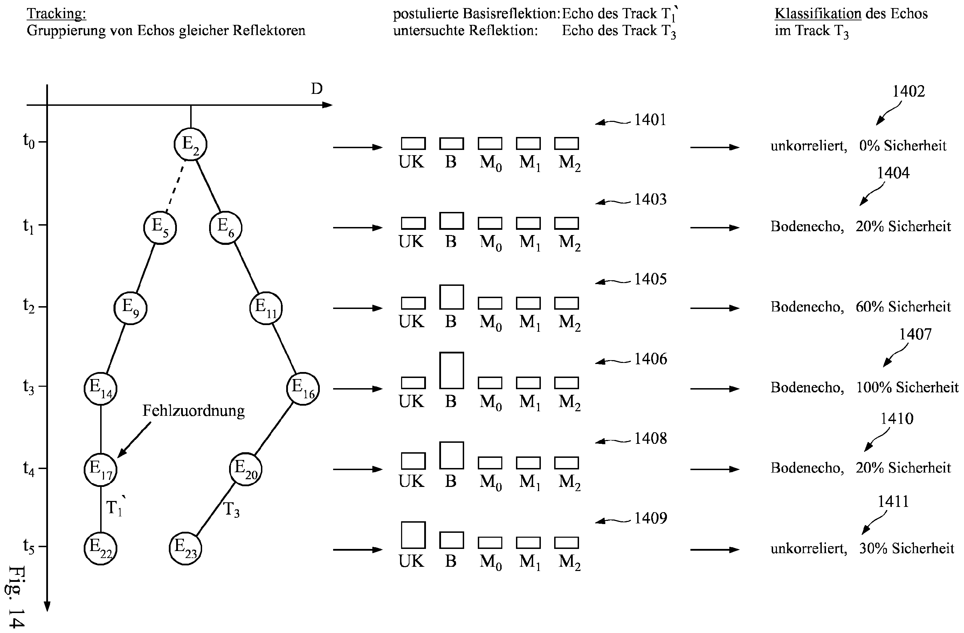

Das vorgestellte Verfahren bietet darüber hinaus aber auch die Möglichkeit, im Falle einer fehlerhaften Zuordnung eines Echos zu einem Track eine bereits erfolgte Klassifikation zu revidieren. Figur 14 zeigt ein Beispiel für eine fehlerhafte Zuordnung des Echos $E_{17}$ zu Track T1'. Die Histogramme 1401, 1403, 1405 sowie 1406 zu den Zeitpunkten t = $t_0$, bis t = $t_3$ entsprechen aufgrund identischer Zuordnungen der Echos zu den Tracks exakt denen aus der Figur 13. Infolgedessen wird wie auch in Figur 14 das Echo $E_{16}$ als Bodenecho zugehörig zu einem (postulierten) Füllgutecho $E_{14}$ klassifiziert 1407. Die Häufigkeit der Merkmalsklasse B für das Bodenecho im Histogramm 1406 ragt weit über alle anderen Häufigkeiten hinaus, weshalb zum Zeitpunkt t = $t_3$ die Klassifikation mit einer Sicherheit von 100% erfolgen kann.

Zum Zeitpunkt t = $t_4$ möge beispielsweise aufgrund leicht veränderter Amplitudenverhältnisse von der Trackingeinrichtung 7022 das Echo $E_{17}$ als das Echo erkannt werden, welches von der gleichen Reflexionsstelle wie die Echos $E_5$, $E_9$ und $E_{14}$ im Behälter stammt. Es kommt demzufolge zu einer Fehlzuordnung des Echos $E_{17}$ zum Track T1'.

Die erfindungsgemäße Statistikeinrichtung 7024 zur Auswertung der Verhältnisse der Geschwindigkeiten zweier Echos stellt im Rahmen der Abarbeitung des Verfahrensschrittes 9064 der Figur 10 nun fest, dass die Echos des Tracks T1' und die Echos des Tracks T3 nicht mehr zueinander passen. Im Histogramm 1408 erhöht sich demzufolge die Häufigkeit innerhalb der Merkmalsklasse UK für unkorrelierte Echos, wohingegen die Häufigkeit der Merkmalsklasse B reduziert wird 1408,1409. Die aktuelle Klassifikation des Echos $E_{20}$ zum Zeitpunkt t = $t_4$ deutet immer noch auf ein Bodenecho hin, da die Merkmalsklasse B des aktuell vorliegenden Histogramms 1408 nach wie vor die höchste Häufigkeit aufweist. Die Sicherheit oder Zuverlässigkeit dieser Aussage 1410 lässt aber massiv nach, da der Abstand der Häufigkeit der Merkmalsklasse B von der Häufigkeit der Merkmalsklasse UK im Histogramm 1408 nur noch sehr klein ist.

Im weiteren Ablauf revidiert sich die vorab erfolgte Klassifikation weiter. Zum Zeitpunkt t = $t_5$ wird die Häufigkeit der Merkmalsklasse UK für unkorrelierte Echos weiter erhöht, und demzufolge die Häufigkeit der Merkmalsklasse B im Histogramm 1409 weiter verringert. Da die Merkmalsklasse UK nun die größte Häufigkeit besitzt, wird das Echo $E_{23}$ des Track T3 nun nicht mehr als Bodenecho zur (postulierten) Füllgutreflexion $E_{22}$ des Track T1' betrachtet. Das Verfahren deutet vielmehr auf "Unkorrcliertheit der Echos" oder "Antikorrelationsecho" hin, d.h. das Echo $E_{23}$ steht mit einer Wahrscheinlichkeit oder Sicherheit von 30% 1411 in keinem kausalen Zusammenhang zu dem Echo $E_{22}$.

Das vorgestellte Verfahren zur Erkennung von Mehrfach-, Boden- oder Antikorrelationsechos unterscheidet sich maßgeblich von den bisher bekannten Verfahren.

Besonderer Vorteil des dargelegten Verfahrens ist die Möglichkeit einer Klassifikation von Echos ohne vorab erfolgte Identifikation eines Füllgutechos. Das Verfahren unterscheidet sich an dieser Stelle von anderen Verfahren genau darin, dass systematisch eine Untersuchung auf Basis mehrerer postulierter Füllgutechos erfolgt. Die kombinatorische Komplexität der Berechnung wird durch die Berücksichtigung physikalischer Gegebenheiten in Bezug auf die Orte der jeweiligen Echos wirksam reduziert.

Weiterhin eröffnet das vorgestellte Verfahren die Möglichkeit einer fortlaufenden Berechnung der Mehrfach-, Boden- und Antikorrelationseigenschaften identifizierter Echos. Dies eröffnet zum einen die Möglichkeit, in Zeiträumen stationärer Befüllungsverhältnisse eine Klassifikation der gefundenen Echos durchzuführen. Bisher bekannte Verfahren funktionieren nicht bei fehlender Bewegung, da eine Ermittlung der Geschwindigkeit in diesen Zeiträumen nicht möglich ist. Weiterhin ermöglicht die fortlaufende Berechnung ein Revidieren einer bislang erfolgten Klassifikation, was mit bekannten Verfahren ebenfalls nicht möglich ist.

Darüber hinaus stellt das vorgestellte Verfahren eine Möglichkeit bereit, Echos in eine der Gruppen ausgewählt aus Antikorrelationsechos, Mehrfachechos oder Bodenechos einzugruppieren, und die Zuverlässigkeit der Klassifikation zu ermitteln. Antikorrelationsechos sind bislang als Echogruppe gänzlich unbekannt. Im Kontext der Erfindung mögen Antikorrelationsechos alle diejenigen Echos sein, welche zu einer Füllgutreflexion weder in einem Mehrfach- noch in einem Bodenverhältnis stehen. Antikorrelationsechos zeigen in Bezug auf ihre Bewegung keinerlei Verbindung zur Bewegung eines Füllgutechos. Typische Beispiele für Antikorrelationsechos mögen Echos sein, welche zufällig im Rauschen eines Signals gefunden werden. Weiterhin können sich Antikorrelationsechos im vorgestellten Verfahren immer dann ergeben, wenn als Füllgutreflexion fälschlicherweise eine Echo einer fest im Behälter eingebauten Störstelle postuliert wird 1205.

Einhergehend mit der Definition einer Echogruppe für Antikorrelationsechos definiert das vorgestellte Verfahren weiterhin eine Methodik zur simultanen, zeitlich und logisch eine Einheit bildenden Untersuchung von Echos in Bezug auf Mehrfach- , Boden- oder Antikorrelationsverhalten. Bislang verwendete Verfahren konzentrieren sich nur auf die Untersuchung von Mehrfachechoeigenschaften oder Bodenechoeigenschaflen. Die logische Integration dieser Untersuchung in nur einem einzigen Verfahren stellt ein weiteres Alleinstellungsmerkmal dar.

Letztlich stellt das vorgestellte Verfahren eine Methode bereit, mit der auch Mehrfachechos eines Bodenechos innerhalb einer Echokurve identifiziert werden können. Ein Fachmann kann die Prinzipien der Erfindung mit den Informationen einer manuell eingegebenen oder automatische ermittelten Behälterhöhe kombinieren. Mit der Berücksichtigung einer Behälterhöhe kann die kombinatorische Vielfalt bei der Untersuchung auf Mehrfach- und Bodenechos (Figur 12) weiter reduziert werden. Darüber hinaus kann durch das Postulieren von Bodenechos, deren Position hinter der Behälterhöhe liegt, gezielt eine Suche nach Mehrfach-Bodenechos nach obigem Schema durchgeführt werden.

In der vorliegenden Offenbarung wird an verschiedenen Stellen der Begriff der Domschachtlänge genutzt. Bei einem Domschacht mag es sich um einen Schacht handeln, über den der Tank befüllt werden kann. Ein Domschacht mag auch durch eine Zustiegmöglichkeit für Bedienpersonal, ein sogenanntes Mannloch, realisiert sein. Weiterhin mag es auch möglich sein, einen Domschacht für andere Zwecke zu benutzen. In dem sog. Dom im Scheitel der Tanks kann u. a. das Füllstandmessgerät angebracht sein.

Es sei an dieser Stelle darauf hingewiesen, dass sich diese Größe innerhalb der Signalverarbeitung des Sensors geringfügig von der physikalisch nachmessbaren Größe unterscheiden kann. Zum einen kann der Nullpunkt des Sensors durch Parametrierung verändert werden. Weiterhin kann beispielsweise die Höhe eines Behälters in einer Anwendung inklusive eines darauf montierten Domschachtes definiert sein, in anderen Anwendungen wie im Fall einer negativen Domschachtlänge macht diese Definition so keinen Sinn. Im Rahmen der vorliegenden Erfindung sollen daher mit den betreffenden Größen Zahlenwerte definiert sein, die in einer Beziehung zu den physikalischen Größen stehen, und anhand derer spezielle Verfahren, insbesondere eine mittelbare Messung der Füllgutlage, realisiert werden können.

Es sei weiterhin erwähnt, dass die offenbarte technische Lehre für die Füllstandmessung nach dem FMCW-Prinzip ebenso geeignet ist wie bei der Füllstandmessung nach dem Prinzip der geführten Mikrowelle, dem Ultraschallprinzip, dem Laserprinzip oder einem anderen Laufzeitverfahren.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

**Patentansprüche**

1. Füllstandmessgerät (101) zur Bestimmung der Position eines Füllstandes und/oder einer Trennschicht in einem Behälter (109), das Füllstandmessgerät aufweisend:

   eine Echokurvenerfassungseinrichtung (102) zum Erfassen einer Echokurve;
   eine Echoidentifikationseinrichtung (7021) zur Identifikation von zumindest zwei Echos in der Echokurve;
   eine Geschwindigkeitsermittlungseinrichtung (7023) zur Ermittlung von Geschwindigkeitswerten der zumindest zwei Echos;
   wobei das Füllstandmessgerät (101) zur Durchführung einer alternierenden Postulierung eines der identifizierten Echos als Füllstandecho und zur Durchführung einer Echoklassifikation der zumindest zwei Echos unter Berücksichtigung eines Vorzeichens eines Verhältnisses der ermittelten Geschwindigkeitswerte ausgeführt ist;
   wobei die Echoklassifikation eine Klassifikation zumindest eines weiteren identifizierten Echos und eine Berechnung der entsprechenden Wahrscheinlichkeiten für eine korrekte Klassifikation umfasst; und
   wobei die Echoklassifikation zumindest zwei der identifizierten Echos der Echokurve einer Merkmalsklasse ausgewählt aus einer Gruppe umfassend die Merkmalsklassen Bodenecho, Mehrfachecho, Antikorrelationsecho und Füllgutecho zuordnet;
   wobei das Füllstandmessgerät (101) ferner eine Statistikeinrichtung (7024) zur Auswertung statistischer Eigenschaften einer gemeinsamen Kennzahl der zumindest zwei Echos aufweist, wobei die gemeinsame Kennzahl ein Verhältnis der ermittelten Geschwindigkeitswerte zweier der zumindest zwei Echos ist; und
   wobei das Füllstandmessgerät (101) zur Durchführung der Echoklassifikation der zumindest zwei Echos als Ergebnis der Auswertung der statistischen Eigenschaften der gemeinsamen Kennzahl ausgeführt ist.

2. Füllstandmessgerät (101) nach Anspruch 1, weiterhin aufweisend:

   eine Trackingeinrichtung (7022), welche identifizierte Echos in einen logischen Zusammenhang zu bereits früher identifizierten Echos stellt; und
   welche bei Fehlen eines Echos in der Echokurve eine wahrscheinliche Position dieses Echos abschätzt.

3. Füllstandmessgerät (101) nach einem der vorhergehenden Ansprüche,
wobei die Statistikeinrichtung (7024) die Kennzahlen zumindest eines Paares der identifizierten Echos ermittelt.

4. Füllstandmessgerät (101) nach einem der Ansprüche 1 bis 3,
wobei die Statistikeinrichtung (7024) die Echoklassifikation als Histogramm darstellt, in welchem jeder der möglichen Merkmalsklassen eine Wahrscheinlichkeit zugeordnet ist, welche zum Ausdruck bringt, wie hoch die statistische Wahrscheinlichkeit dafür ist, dass das entsprechende Echo der entsprechenden Merkmalsklasse angehört.

5. Füllstandmessgerät (101) nach einem der vorhergehenden Ansprüche,
ausgeführt zum Bestätigen oder Revidieren der Echoklassifikationen durch eine Erfassung und Auswertung einer weiteren Echokurve.

6. Füllstandmessgerät (101) nach einem der vorhergehenden Ansprüche,
ausgeführt zur simultanen Identifikation von Mehrfachechos und Bodenechos.

7. Verfahren zur Bestimmung der Position eines Füllstandes und/oder einer Trennschicht in einem Behälter (109), das Verfahren aufweisend die folgenden Schritte:

Erfassen einer Echokurve;
Identifikation von zumindest zwei Echos in der Echokurve;
Alternierende Postulierung eines der identifizierten Echos als Füllstandecho;
Ermittlung von Geschwindigkeitswerten der zumindest zwei Echos;
Auswerten statistischer Eigenschaften einer gemeinsamen Kennzahl der zumindest zwei Echos, wobei die gemeinsame Kennzahl ein Verhältnis der ermittelten Geschwindigkeitswerte zweier der zumindest zwei Echos ist
Durchführung einer Echoklassifikation der zumindest zwei Echos unter Berücksichtigung eines Vorzeichens eines Verhältnisses der ermittelten Geschwindigkeitswerte;
wobei die Echoklassifikation eine Klassifikation zumindest eines weiteren identifizierten Echos und eine Berechnung der entsprechenden Wahrscheinlichkeiten für eine korrekte Klassifikation umfasst; und
wobei die Echoklassifikation zumindest zwei der identifizierten Echos der Echokurve einer Merkmalsklasse ausgewählt aus einer Gruppe umfassend die Merkmalsklassen Bodenecho, Mehrfachecho, Antikorrelationsecho und Füllgutecho zuordnet; und

wobei die Echoklassifikation der zumindest zwei Echos ein Ergebnis der Auswertung der statistischen Eigenschaften der gemeinsamen Kennzahl ist.

8. Verfahren nach Anspruch 7, weiterhin aufweisend die Schritte:

a1) Identifikation einer Vielzahl an Echos in der Echokurve;
b) Durchführung einer Echoklassifikation von zumindest zwei Echos in der Echokurve als Ergebnis der Auswertung der statistischen Eigenschaften der gemeinsamen Kennzahlen identifizierter Echos;
wobei die Echoklassifikation zumindest zwei der identifizierten Echos der Echokurve einer Merkmalsklasse ausgewählt aus einer Gruppe umfassend die Merkmalsklassen Bodenecho, Mehrfachecho, Antikorrelationsecho und Füllgutecho zuordnet.

9. Verfahren nach einem der Ansprüche 7 oder 8, weiterhin aufweisend den Schritt:
Bestätigung oder Revision der Echoklassifikationen durch eine Erfassung einer weiteren Echokurve und Durchführung zumindest der Schritte (a1) und (b), sowie Anpassung der entsprechenden Wahrscheinlichkeit für eine korrekte Klassifikation.

10. Programmelement, das, wenn es auf einem Prozessor des Füllstandmessgeräts (101) nach einem der Ansprüche 1 bis 6 ausgeführt wird, den Prozessor anleitet, die Schritte des Verfahrens nach einem der Ansprüche 7 bis 9 durchzuführen..

11. Computerlesbares Medium zum Speichern eines Programmelements, das, wenn es auf einem Prozessor des Füllstandmessgeräts (101) nach einem der Ansprüche 1 bis 6 ausgeführt wird, den Prozessor anleitet, die Schritte des Verfahrens nach einem der Ansprüche 7 bis 9 durchzuführen.

**Claims**

1. Fill level measurement device (101) for determining the position of a fill level and/or a separating layer in a container (109), the fill level measurement device comprising:

an echo curve detection unit (102) for detecting an echo curve;
an echo identification unit (7021) for identifying at least two echoes in the echo curve;
a speed detection unit (7023) for detecting speed values of the at least two echoes;
wherein the fill level measurement device (101) is configured to postulate one of the identified echoes to be the fill level echo and so as to carry out an echo classification of the at least two echoes, taking into account a sign of a ratio of the detected speed values,

wherein the echo classification comprises a classification of at least one additional identified echo and a calculation of the corresponding probabilities of a correct classification; and

wherein the echo classification assigns at least two of the identified echoes of the echo curve to a feature class selected from a group comprising the feature classes bottom echo, multiple echo, anti-correlation echo and filling material echo;

wherein the fill level measurement device (101) further comprises a statistics unit (7024) for evaluating statistical properties of a shared characteristic of at least two echoes, the shared characteristic being a ratio of the detected speed values of two of the at least two echoes; and

wherein the fill level measurement device (101) is configured for carrying out the echo classification of at least two echoes as a result of the evaluation of the statistical properties of the shared characteristics of identified echoes.

2. Fill level measurement device (101) according to claim 1, further comprising:

a tracking unit (7022), which places identified echoes in a logical relationship with previously identified echoes; and

which estimates a probable position of an echo if this echo is absent from the echo curve.

3. Fill level measurement device (101) according to any one of the preceding claims,

wherein the statistical unit (7024) determines the characteristics of at least one pair of the identified echoes.

4. Fill level measurement device (101) according to any one of claims 1 to 3,

wherein the statistical unit (7024) represents the echo classification as a histogram, in which each possible feature class is assigned a probability, which expresses how great the statistical probability is that the corresponding echo belongs to the corresponding feature class.

5. Fill level measurement device (101) according to any one of the preceding claims,

configured so as to confirm or revise the echo classifications by detecting and evaluating a further echo curve.

6. Fill level measurement device (101) according to any one of the preceding claims,

configured for simultaneous identification of multiple echoes and bottom echoes.

7. Method for determining the position of a fill level and/or a separating layer in a container (109), the method comprising the following steps:

detecting an echo curve;

identifying at least two echoes in the echo curve;

postulating one of the at least two echoes to be the fill level echo, in an alternating manner;

detecting speed values of the at least two echoes;

evaluating statistical properties of a shared characteristic of at least two echoes, the shared characteristic being a ratio of the detected speed values of two of the at least two echoes;

carrying out an echo classification of the at least two echoes, taking into account a sign of a ratio of the detected speed values;

wherein the echo classification comprises a classification of at least one further identified echo and a calculation of the corresponding probabilities of a correct classification; and

wherein the echo classification assigns at least two of the identified echoes of the echo curve to a feature class selected from a group comprising the feature classes bottom echo, multiple echo, anti-correlation echo and filling material echo; and

wherein the echo classification of the at least two echoes is a result of the evaluation of the statistical properties of the shared characteristic.

8. Method according to claim 7, further comprising the steps of:

a1) identifying a plurality of echoes in the echo curve;

b) carrying out an echo classification of at least two echoes in the echo curve as a result of the evaluation of the statistical properties of the shared characteristics of identified echoes;

wherein the echo classification assigns at least two of the identified echoes of the echo curve to a feature class selected from a group comprising the feature classes bottom echo, multiple echo, anti-correlation echo and filling material echo.

9. Method according to either claim 7 or claim 8, further comprising the step of:

confirming or revising the echo classifications by detecting a further echo curve and carrying out at least steps (a1) and (b), and adapting the corresponding probability of a correct classification.

10. Program element which, when it is executed on a processor of a fill level measurement device (101) according to any one of claims 1 to 6, causes the processor to carry out the steps of the method according to any one of claims 7 to 9.

11. Computer-readable medium for storing a program element which, when it is executed on a processor of a fill level measurement device (101) according to any one of claims 1 to 6, causes the processor to carry out the steps of the method according to any of claims 7 to 9.

## Revendications

1. Dispositif de mesure de niveau de remplissage (101) pour déterminer la position d'un niveau de remplissage et/ou d'une couche de séparation dans un contenant (109), le dispositif de mesure de niveau de remplissage comprenant:

   une unité de détection d'une courbe d'écho (102) pour détecter une courbe d'écho;
   une unité d'identification de courbe d'écho (7021) pour identifier au moins deux échos dans la courbe d'écho;
   une unité de détection de la vitesse (7023) pour détecter des valeurs de vitesse des au moins deux échos;
   le dispositif de mesure de niveau de remplissage (101) étant configuré pour postuler un des échos identifiés comme étant l'écho du niveau de remplissage et pour effectuer une classification d'écho des au moins deux échos en prenant en compte un signe d'un rapport des valeurs de vitesse détectées,
   la classification d'écho comprenant une classification d'au moins un écho identifié supplémentaire et un calcul de la probabilité correspondante d'une classification correcte; et
   la classification d'écho attribuant au moins deux des échos identifiés de la courbe d'écho à une classe de caractéristique sélectionnée parmi un groupe comprenant les classes de caractéristique écho de fond, écho multiple, écho d'anti-corrélation et écho du matériau de remplissage;
   le dispositif de mesure de niveau de remplissage (101) comprenant en outre une unité de statistique (7024) pour évaluer des propriétés statistiques d'une caractéristique commune des au moins deux échos, la caractéristique commune étant un rapport des valeurs de vitesse détectées de deux des au moins deux échos; et
   le dispositif de mesure de niveau de remplissage (101) étant configuré pour effectuer la classification d'écho des au moins deux échos suite à l'évaluation des propriétés statistiques de la caractéristique commune des échos identifiés.

2. Dispositif de mesure de niveau de remplissage (101) selon la revendication 1, comprenant en outre:

   une unité de suivi (7022) qui place les échos identifiés en relation logique avec les échos précédemment identifiés; et
   qui estime une position plausible d'un écho si ledit écho est absent de la courbe d'écho.

3. Dispositif de mesure de niveau de remplissage (101) selon l'une quelconque des revendications précédentes,
   l'unité de statistique (7024) déterminant les caractéristiques d'au moins une paire des échos identifiés.

4. Dispositif de mesure de niveau de remplissage (101) selon l'une quelconque des revendications 1 à 3,
   l'unité de statistique (7024) représentant la classification d'écho sous forme d'histogramme, dans lequel une probabilité est attribuée à chaque classe de caractéristique plausible, qui manifeste l'ampleur de la probabilité statistique que l'écho correspondant appartienne à la classe de caractéristique correspondante.

5. Dispositif de mesure de niveau de remplissage (101) selon l'une quelconque des revendications précédentes,
   configuré pour confirmer ou réviser la classification d'écho en détectant et évaluant une courbe d'écho supplémentaire.

6. Dispositif de mesure de niveau de remplissage (101) selon l'une quelconque des revendications précédentes,
   configuré pour identifier simultanément des échos multiples et des échos de fond.

7. Procédé pour déterminer la position d'un niveau de remplissage et/ou d'une couche de séparation dans un contenant (109), le procédé comprenant les étapes suivantes:

   détecter une courbe d'écho;
   identifier au moins deux échos dans la courbe d'écho;
   détecter des valeurs de vitesse des au moins deux échos;
   postuler de manière alternative un écho des au moins deux échos comme étant l'écho du niveau de remplissage;
   évaluer des propriétés statistiques d'une caractéristique commune des au moins deux échos, la caractéristique commune étant un rapport des valeurs de vitesse détectées de deux des au moins deux échos;
   exécuter une classification d'écho des au moins deux échos en prenant en compte un signe d'un rapport des valeurs de vitesse détectées;
la classification d'écho comprenant une classification d'au moins un écho identifié supplémentaire et un calcul de la probabilité correspondante d'une classification correcte; et
la classification d'écho attribuant au moins deux des échos identifiés de la courbe d'écho à une classe de caractéristique sélectionnée parmi un groupe comprenant les classes de caractéristique écho de fond, écho multiple, écho d'anti-corrélation et écho du matériau de remplissage; et
la classification d'écho des au moins deux échos donnant suite à l'évaluation des propriétés statistiques de la caractéristique commune.

8. Procédé selon la revendication 7, comprenant en outre les étapes consistant à:

    a1) identifier une pluralité d'échos dans la courbe d'écho;
    b) exécuter une classification d'écho d'au moins deux échos dans la courbe d'écho suite à l'évaluation des propriétés statistiques des caractéristiques communes des échos identifiés;
    la classification d'écho attribuant au moins deux des échos identifiés de la courbe d'écho à une classe de caractéristique sélectionnée parmi un groupe comprenant les classes de caractéristique écho de fond, écho multiple, écho d'anti-corrélation et écho du matériau de remplissage;

9. Procédé selon la revendication 7 ou 8, comprenant en outre les étapes consistant à:
confirmer or réviser la classification d'écho en détectant une courbe d'écho supplémentaire et en exécutant au moins les étapes (a1) et (b), et en adaptant la probabilité correspondante d'une classification correcte.

10. Élément de programme qui, lorsqu'il est exécuté sur un processeur d'un dispositif de mesure de niveau de remplissage (101) selon l'une quelconque des revendications 1 à 6, entraine le processeur à exécuter les étapes du procédé selon l'une quelconque des revendications 7 à 9.

11. Support lisible par ordinateur pour enregistrer un élément de programme qui, lorsqu'il est exécuté sur un processeur d'un dispositif de mesure de niveau de remplissage (101) selon l'une quelconque des revendications 1 à 6, entraine le processeur à exécuter les étapes du procédé selon l'une quelconque des revendication 7 à 9.

Fig. 1

Fig. 2

Fig. 3

Fig. 4

Fig. 5

Fig. 6

Fig. 7

Fig. 8

Fig. 9

S — 9060

Verhältnis P berechnen — 9061

Histogramm (A,B) selekt. — 9062

9063
Histogramm initialisiert?

ja — nein

P in Histogramm eintr. — 9064

alle anderen Klassen erodieren — 9065

alle Häufigkeiten nullen — 9066

P in Histogramm eintr. — 9067

E — 9068

Fig. 10

Fig .11

zu untersuchende Reflektion

postulierte Füllgutreflexion

| | $T_0$ | $T_1$ | $T_2$ | $T_3$ | $T_4$ |
|---|---|---|---|---|---|
| $T_0$ | ✕ | UK B $M_0$ $M_1$ $M_2$ | UK B $M_0$ $M_1$ $M_2$ | UK B $M_0$ $M_1$ $M_2$ | UK B $M_0$ $M_1$ $M_2$ |
| $T_1$ | ✕ | ✕ | UK B $M_0$ $M_1$ $M_2$ | UK B $M_0$ $M_1$ $M_2$ | UK B $M_0$ $M_1$ $M_2$ |
| $T_2$ | ✕ | ✕ | ✕ | UK B $M_0$ $M_1$ $M_2$ | UK B $M_0$ $M_1$ $M_2$ |
| $T_3$ | ✕ | ✕ | ✕ | ✕ | UK B $M_0$ $M_1$ $M_2$ |
| $T_4$ | ✕ | ✕ | ✕ | ✕ | ✕ |

1202
1205
1204
1203
1201

Fig. 12

Tracking:
Gruppierung von Echos gleicher Reflektoren

postulierte Basisreflektion: Echo des Track $T_1$
untersuchte Reflektion: Echo des Track $T_3$

Klassifikation des Echos
im Track $T_3$

D

$t_0$   $E_2$

$t_1$   $E_5$   $E_6$

$t_2$   $E_9$   $E_6$

$t_3$   $E_{14}$   $E_{16}$

$t_4$   $E_{18}$   $E_{20}$

$t_5$   $E_{23}$

$T_1$   $T_3$

1301 — UK   B   $M_0$   $M_1$   $M_2$ → unkorreliert, 0% Sicherheit   1302

1303 — UK   B   $M_0$   $M_1$   $M_2$ → Bodenecho, 20% Sicherheit   1304

1305 — UK   B   $M_0$   $M_1$   $M_2$ → Bodenecho, 60% Sicherheit

1306 — UK   B   $M_0$   $M_1$   $M_2$ → Bodenecho, 100% Sicherheit   1307

1308 — UK   B   $M_0$   $M_1$   $M_2$ → Bodenecho, 100% Sicherheit

1309 — UK   B   $M_0$   $M_1$   $M_2$ → Bodenecho, 100% Sicherheit   1310

Fig. 13

EP 2 527 804 B1

Klassifikation des Echos
im Track $T_3$

1402 → unkorreliert, 0% Sicherheit
1404 → Bodenecho, 20% Sicherheit
1407 → Bodenecho, 60% Sicherheit
1410 → Bodenecho, 100% Sicherheit
1411 → Bodenecho, 20% Sicherheit
→ unkorreliert, 30% Sicherheit

postulierte Basisreflektion: Echo des Track $T_1'$
untersuchte Reflektion: Echo des Track $T_3$

1401
1403
1405
1406
1408
1409

$M_2$  $M_1$  $M_0$  B  UK

Tracking:
Gruppierung von Echos gleicher Reflektoren

D

$E_2$  $E_6$  $E_{11}$  $E_{16}$  $E_{20}$  $E_{23}$  $T_3$

$E_5$  $E_9$  $E_{14}$  $E_{17}$  $E_{22}$  $T_1'$

Fehlzuordnung

$t_0$  $t_1$  $t_2$  $t_3$  $t_4$  $t_5$

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004052110 A1
- DE 102006019191 A1
- WO 2010071564 A1
- US 5438867 A
- DE 4233324 A1
- WO 2009037000 A
- EP 09172769 A
- EP 2309235 A1

**In der Beschreibung aufgeführte Nicht-Patentliteratur**

- **PETER DEVINE.** *Füllstandmessung mit. Radar Leitfaden für die Prozessindustrie,* ISBN 3-00-008216-6